# EUROPEAN PATENT APPLICATION

(11) **EP 4 693 912 A1**
(43) Date of publication of application: **11.02.2026**
(21) Application number: 24792975.5
(22) Date of filing: 16.04.2024
(51) Int. Cl.: H04B 1/401, H01Q 5/314, H01Q 1/38, H01Q 1/24, H04B 17/17, H04B 17/18, H04B 1/04, H04B 7/06, H04B 17/16, H04B 1/40

(54) **ELECTRONIC DEVICE COMPRISING ANTENNA**

(30) Priority: 19.04.2023 KR 20230051325; 07.08.2023 KR 20230103206
(71) Applicant: Samsung Electronics Co., Ltd., Suwon-si, Gyeonggi-do 16677 (KR)
(72) Inventor: LEE, Youngmin, Suwon-si Gyeonggi-do 16677 (KR); NA, Hyoseok, Suwon-si Gyeonggi-do 16677 (KR); RYU, Gyeonghun, Suwon-si Gyeonggi-do 16677 (KR); MOON, Yohan, Suwon-si Gyeonggi-do 16677 (KR)
(74) Representative: HGF
(86) International application number: PCT/KR2024/005083
(87) International publication number: WO 2024/219789

(57) **Abstract**

In embodiments, an electronic device is provided. The electronic device may comprise: a processor; a frontend module including a radio frequency (RF) transceiver, a power amplifier (PA), and a coupler; an antenna; a load component; and a switching circuit configured to selectively connect the load component to an antenna path for the antenna. The processor can control the RF transceiver to transmit a signal through the front end module and the antenna while the load component is connected to the antenna path via the switching circuit.

## Description

### [Technical Field]

The present disclosure relates to an electronic device including an antenna.

### [Background Art]

An electronic device may transmit a signal through an antenna or receive a signal through the antenna. For example, the electronic device may transmit or receive a signal amplified through a power amplifier (PA).

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, an electronic device is provided. The electronic device may comprise a processor, a radio frequency (RF) transceiver, a front end module including a power amplifier (PA) and a coupler, an antenna, a load element, and a switching circuit configured to selectively connect the load element to an antenna path for the antenna. The processor may be configured to control the RF transceiver to transmit a signal through the front end module and the antenna while the load element is connected to the antenna path through the switching circuit. The processor may be configured to obtain, through the RF transceiver, a feedback signal from the coupler while the load element is connected to the antenna path through the switching circuit and the signal is transmitted through the front end module and the antenna. The processor may be configured to obtain information corresponding to transmission power of the signal based on the feedback signal obtained while the load element is connected to the antenna path through the switching circuit. The processor may be configured to, in a case that the information indicates that the transmission power is within a reference power range, control the RF transceiver to disconnect the load element from the antenna path through the switching circuit and transmit the signal through the front end module and the antenna.

In embodiments, an electronic device is provided. The electronic device may comprise a processor, a radio frequency (RF) transceiver, a front end module including a power amplifier (PA) and a coupler, a first antenna, a second antenna, a load element, and a switching circuit configured to selectively connect the load element to an antenna path for the first antenna. The processor may be configured to control the RF transceiver to transmit a first signal of a designated frequency band through the front end module and the first antenna while the load element is connected to the antenna path through the switching circuit. The processor may be configured to obtain, through the RF transceiver, a feedback signal from the coupler while the load element is connected to the antenna path through the switching circuit and the signal is transmitted through the front end module and the antenna. The processor may be configured to obtain information corresponding to transmission power of the signal based on the feedback signal obtained while the load element is connected to the antenna path through the switching circuit. The processor may be configured to, in a case that the information indicates that the transmission power is outside a reference power range, control the RF transceiver to transmit a second signal of the designated frequency band through the second antenna.

In embodiments, an electronic device is provided. The electronic device may comprise a processor, a radio frequency (RF) transceiver, a front end module including a power amplifier (PA) and a coupler, an antenna, a load element, and a switching circuit configured to selectively connect the load element to an antenna path for the antenna. The processor may be configured to control the RF transceiver to transmit a signal through the front end module and the antenna while the load element is connected to the antenna path through the switching circuit. The processor may be configured to obtain, through the RF transceiver, a feedback signal of the designated frequency band from the coupler while the load element is connected to the antenna path through the switching circuit and the signal is transmitted through the front end module and the antenna. The processor may be configured to obtain information corresponding to transmission power of the signal based on the feedback signal obtained while the load element is connected to the antenna path through the switching circuit. The processor may be configured to, in a case that the information indicates that the transmission power is outside a reference power range, cease signal transmission using the antenna path.

### [Description of the Drawings]

FIG. 1 is a block diagram of an electronic device in a network environment.
FIG. 2 illustrates an example of an electronic device including a switching circuit.
FIG. 3 illustrates an example of a Smith chart.
FIGS. 4A and 4B illustrate examples of operations of a load element and a switching circuit.
FIG. 5 illustrates an example of an electronic device including a tuning circuit.
FIGS. 6A and 6B illustrate examples of operations of a load element and a tuning circuit.
FIG. 7 illustrates an example of a change of a front end module.
FIG. 8 illustrates an example of antenna switching.
FIG. 9 illustrates an example of a change of a front end module using a tuning circuit.
FIG. 10 illustrates an example of antenna switching using a tuning circuit.
FIG. 11 illustrates an operation flow of an electronic device for ceasing signal transmission based on a feedback signal.
FIG. 12 illustrates an operation flow of an electronic device for transmitting a signal based on a feedback signal.
FIG. 13 illustrates an operation flow of an electronic device for changing an antenna based on a feedback signal.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to signals (e.g., signal, control signal, transmission signal, reception signal, first signal, second signal, test signal, random access preamble, feedback signal), terms referring to frequency resources (e.g., frequency band, uplink band, downlink band, operating frequency, satellite frequency band), terms referring to resources, terms for operation states (e.g., step, operation, procedure), terms referring to network entities, and terms referring to components of a device, used in the following description, are exemplified for convenience of description. Therefore, the present disclosure is not limited to terms to be described below, and another term having an equivalent technical meaning may be used.

A term refer to a component of an electronic device (e.g., a communication module, a wireless communication module, a substrate, a printed circuit board (PCB), a flexible PCB (FPCB), a module, an antenna, an antenna element, a circuit, a processor, a chip, a component, or a device), a term refer to RF-related component (e.g., a front end module, a power amplifier module (PAM), a front end module including duplexer (FEMid), a power amplifier module including duplexer (PAMid), a Low noise amplifier PAM including duplexer (LPAMid)), a radio frequency front end (RFFE), or a radio frequency integrated circuit (RFIC)), a term referring to a shape of a component (e.g., a structure, a structure, a support potion, a contact portion, or a protrusion), a term referring to a connection portion between structures (e.g., a connection portion, a contact portion, a support portion, a contact structure, a conductive member, or an assembly), a term referring to a circuit (e.g., PCB, FPCB, a signal line, a feeding line, a data line, an RF signal line, an antenna line, an RF path, an RF module, an RF circuit, a splitter, a divider, a coupler, or a combiner), and the like, used in the following description, are exemplified for convenience of explanation. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

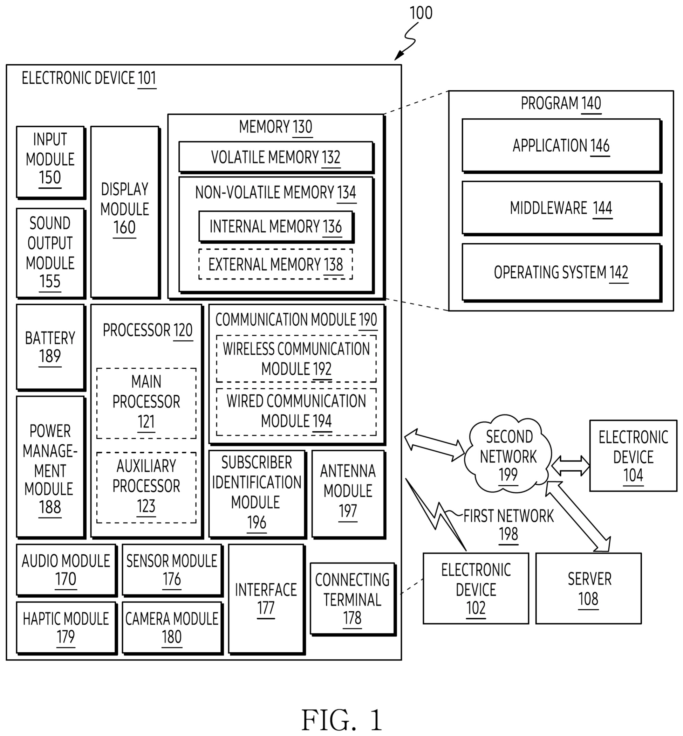

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{T\1}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

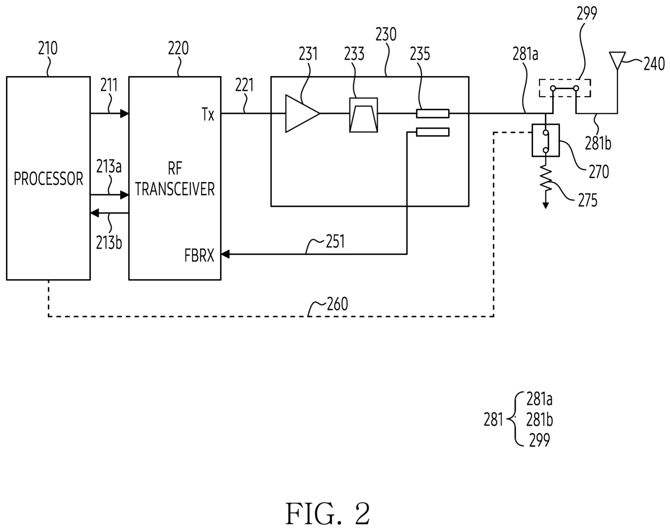

FIG. 2 illustrates an example of an electronic device (e.g., the electronic device 101) including a switching circuit. The switching circuit may be used to check whether an antenna load is normal. For example, the antenna load may include a load of an antenna and a load of a path (e.g., a wiring between PCB and the antenna, hereinafter, an antenna path) to the antenna.

Referring to FIG. 2, the electronic device 101 may include a processor 210, an RF transceiver 220 (e.g., RFIC), a front end module 230, and an antenna 240. The electronic device 101 may include the processor 210. The processor 210 may include one or more processing circuits. The processor 210 may include, for example, at least one of an application processor (AP) (e.g., the main processor 121 of FIG. 1) or a communication processor (CP) (e.g., the auxiliary processor 123 of FIG. 1). For example, the processor 210 may include the AP and the CP. For example, the processor may include the AP. For example, the processor 210 may include the CP. The processor 210 may control the RF transceiver 220 through a control interface 211. For example, the processor 210 may generate a baseband signal. The processor 210 may control the RF transceiver 220 to process the generated baseband signal. The processor 210 may transmit a signal 213a (e.g., analog data or digital data). For example, the signal 213a may be a signal transmitted for checking an antenna load. For another example, the signal 213a may be a communication signal to be transmitted to another electronic device (e.g., a base station, or another terminal). For example, the signal 213a may include a random access preamble. The processor 210 may control the RF transceiver 220 so that the signal is transmitted through the antenna 240. The processor 210 may receive a signal 213b (e.g., analog data or digital data). For example, the signal 213b may be a signal received from another electronic device (e.g., a base station, a satellite, or another terminal) through the antenna 240. For another example, the signal 213b may include a signal (e.g., a feedback signal) for measuring transmission power. The processor 210 may control the RF transceiver 220 so that the signal 213b is received. For example, the processor 210 may obtain the feedback signal through a port (e.g., a feedback receive port (FBRX)) of the RF transceiver 220. According to an embodiment, the processor 210 may control a switching circuit 270.

The electronic device 101 may include the RF transceiver 220. For example, the RF transceiver 220 may be implemented as a single chip (e.g., an RFIC chip) or as a portion of a single package. The RF transceiver 220 may include a digital to analog converter (DAC) for converting a digital signal into an analog signal. The RF transceiver 220 may include a mixer and an oscillator (e.g., a local oscillator (LO)) for up-conversion. The RF transceiver 220 may convert the baseband signal generated by the processor 210 into an RF signal. The RF transceiver 220 may provide the RF signal to the front end module 230 through a path 221. The RF transceiver 220 may include an analog to digital converter (ADC) for converting an analog signal into a digital signal. The RF transceiver 220 may include a mixer and an oscillator for down-conversion. The RF transceiver 220 may convert an RF signal received from the antenna 240 into a baseband signal so that it may be processed by the processor 210. The RF transceiver 220 may include one or more transmission ports. The RF transceiver 220 may include one or more reception ports. According to embodiments, the RF transceiver 220 may receive a feedback signal provided from a component (e.g., a coupler 235) of the front end module 230 electrically connected to the antenna 240. For example, the RF transceiver 220 may include the feedback receive port (FBRX) for the feedback signal. The coupler 235 may be electrically connected to the FBRX through a feedback path 251. According to an embodiment, the RF transceiver 220 may control at least a portion of a modulator or the front end module 230 through a mobile industry processor interface (MIPI) interface.

The electronic device 101 may include the front end module 230. The front end module 230 may be configured to transmit a transmission signal from the RF transceiver 220 to the antenna 240. The front end module 230 may include a power amplifier (PA) 231, a duplexer 233, and/or the coupler 235 for a transmission path. The coupler 235 may provide a signal (hereinafter, a feedback signal) obtained through coupling with a signal transmitted to the antenna 240 to the RF transceiver 220 through the feedback path 251. An RF signal generated by the RF transceiver 220 may be radiated into the air through the antenna 240 via the transmission path. Although not illustrated in FIG. 2, the front end module 230 may transmit a reception signal from the antenna 240 to the RF transceiver 220. For example, front end module 230 may include components for a reception path in addition to components for the transmission path. The front end module 230 may include a low noise amplifier (LNA) for the reception path. As an example, in a frequency band of a frequency division duplex (FDD), the transmission path and the reception path may be branched through the duplexer 233 of the front end module 230. The signal received through the antenna 240 may be transmitted to the RF transceiver 220 through the reception path.

Communication that requires high transmission power (e.g., satellite communication) may cause damage of a power amplifier (e.g., the PA 231). The damage of the power amplifier may cause deterioration of communication quality and malfunction of the electronic device 101. In order to reduce a problem caused by the high transmission power, technologies such as overvoltage protection (OVP) or overcurrent protection (OCP) may be considered in the modulator that supplies power to the PA 231. However, these technologies may be difficult to solve the problem. In the present disclosure, a technology for preventing the damage of the power amplifier is described. As the transmission power is higher, a load at an output end of the power amplifier is required to be stable. When the load of the output end (e.g., an antenna) of the power amplifier changes, supplied power changes, and thus the damage of the power amplifier may occur. For example, an output end of the front end module 230 including the PA 231 may be electrically connected to the antenna 240. The front end module 230 may be electrically connected to the antenna 240 through an antenna path 281. A load of the antenna 240 and/or a load of the antenna path 281 (hereinafter, an antenna load) may vary due to deformation of the antenna 240 or damage to at least a portion of the antenna path 281 (e.g., a C-clip connecting the antenna 240 and PCB of the front end module 230). On the other hand, components (e.g., a first path 281a, a second path 281b, and a connection region 299) of the antenna path 281 are expressed to represent a signal path that is disconnected when the connection region 299 of the antenna path 281 is damaged, and it does not mean that implementation of the antenna path 281 should be implemented with individual components.

The electronic device 101 according to embodiments of the present disclosure may use the switching circuit 270 and a load element 275 to check a connection state with the antenna 240. The load element 275 may be a hardware component that consumes (i.e., a load is applied) electrical or mechanical energy and may represent a component on which a load is applied or a circuit on which a load is applied. Hereinafter, the component on which the load is applied is referred to as the load element 275, but instead of the load element, a load component, a load part, a load factor, a load circuit, a load, and/or an equivalent technical term may be used. The electronic device 101 may include the switching circuit 270 and the load element 275. The load element 275 may be connected to the antenna path 281 for the antenna 240 through the switching circuit 270. In an embodiment, the load element 275 may include at least one passive element having impedance. For example, the load element 275 may include at least one of a resistor, a capacitor, or an inductor. According to an embodiment, the switching circuit 270 and the load element 275 may be disposed on the PCB. For example, in order to check the connection state of the antenna 240, for example, a state of the antenna load, the switching circuit 270 and the load element 275 may be disposed in a region adjacent to a feed line for the antenna 240 in the PCB. For example, the switching circuit 270 may electrically connect the load element 275 to the first path 281a of the antenna path 281.

The electronic device 101 may check the state of the antenna load by transmitting a signal and obtaining a feedback signal for the signal. The antenna load may vary due to damage or disconnection. For example, impedance of the antenna load may increase. If the impedance of the antenna load increases due to the damage or the disconnection while the load element 275 is not connected to the antenna path 281, a total load at the output end of the front end module 230 may be suddenly changed. However, if the impedance of the antenna load increases while the load element 275 is connected to the antenna path 281, the total load at the output end of the front end module 230 may be changed to less than a degree to which the total load changes while the load element 275 is not connected to the antenna path 281. Due to the load element 275 connected to the antenna path 281, an amount of change in an output load of the PA 231 may decrease. As the load element 275 is connected to the antenna path 281, the maximum transmission power is not outputted, and thus a risk of damage of the PA 231 may be lowered. A situation in which communication is not possible or malfunctioning due to the damage of the PA 231 may not occur. For example, the processor 210 of the electronic device 101 may control the switching circuit 270 through a control signal 260. The electronic device 101 may control the switching circuit 270 to connect the antenna path 281 with the load element 275. In a state in which the antenna path 281 and the load element 275 are electrically connected, the electronic device 101 may obtain transmission power based on the feedback signal. The electronic device 101 may check whether the state of the antenna path 281 is normal or abnormal based on the transmission power. For example, damage may occur in the connection region 299 of the antenna path 281. For example, due to the damage, the first path 281a and the second path 281b of the antenna path 281 may be disconnected or connected poorly. Due to the disconnection, load impedance of the antenna 240 may be ∞.

According to an embodiment, the load element 275 may be connected to the first path 281a through the switching circuit 270. The electronic device 101 may obtain the transmission power based on the feedback signal. The electronic device 101 may identify the connection state of the antenna 240 by determining whether the transmission power is within a normal range. When the obtained transmission power is within the normal range, the electronic device 101 may communicate through the antenna 240 connected to the PA 231. For example, when the obtained transmission power is outside the normal range, the electronic device 101 may cease communication or change the antenna path 281 to another antenna path. In an embodiment, for connection between the load element 275 and the antenna path 281 through the switching circuit 270, an operation mode of the electronic device 101 may be defined. For example, the electronic device 101 (e.g., the processor 120 or the processor 210) may electrically connect the load element 275 with the antenna path 281 in a malfunction detection mode. The malfunction detection mode may be used to check the state of the antenna 240 before transmitting a signal to an external electronic device (e.g., the electronic device 102, the electronic device 104, or the electronic device 108). For example, the electronic device 101 may disconnect the load element 275 from the antenna path 281 in a transmission mode different from the malfunction detection mode. The transmission mode may be used to transmit the signal to the external electronic device (e.g., the electronic device 102, the electronic device 104, or the electronic device 108) through the antenna 240.

Although a single feedback signal is illustrated in the example, embodiments of the present disclosure are not limited thereto. The feedback signal may be intermittently output at a low value. According to an embodiment, the electronic device 101 may repeatedly measure feedback signals to reduce an error probability. The electronic device 101 may obtain a plurality of feedback signals through the feedback path 251. The electronic device 101 may obtain transmission power based on the plurality of feedback signals. For example, the electronic device 101 may obtain the transmission power based on the highest value among the plurality of feedback signals.

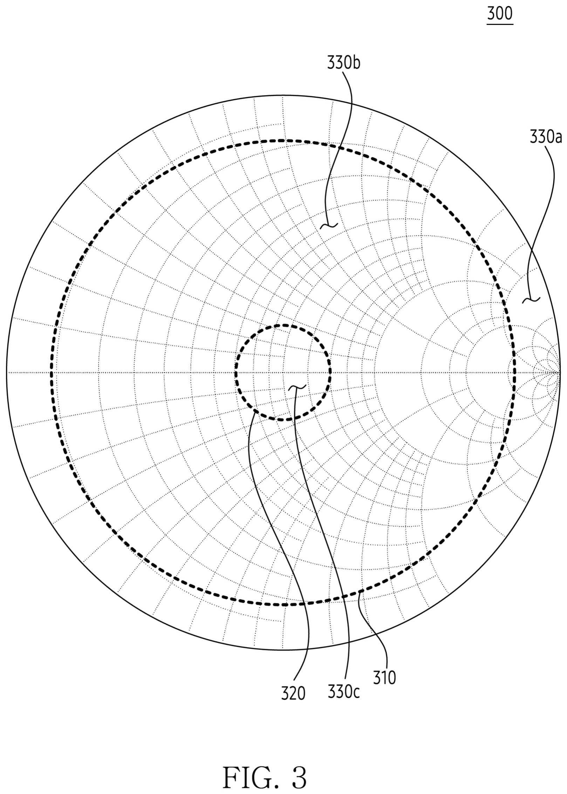

FIG. 3 illustrates an example of a Smith chart. To describe load impedance according to the Smith chart, descriptions of FIG. 2 may be referred to.

Referring to FIG. 3, a Smith chart 300 represents load impedance for a module (e.g., the front end module 230) including a power amplifier of an electronic device 101. The load impedance may be referred to as output load impedance. The output load impedance may represent composite impedance of impedance (hereinafter, first impedance) of an antenna load (e.g., a load of the antenna 240 and/or a load for the antenna path 281) and impedance (hereinafter, second impedance) of a load element 275.

In order to reduce power loss and increase power transmission, impedance matching may be used. For example, while the load element 275 is not connected to the antenna path 281, the first impedance may be the same as characteristic impedance of the front end module 230. To identify a state of the first impedance, the load element 275 may be connected to the antenna path 281. Due to the second impedance of the load element 275, the output load impedance may be different from the characteristic impedance. A relationship between the output load impedance and the characteristic impedance may be described according to a reflection coefficient. For example, if a region of the antenna path 281 is disconnected in a state in which the load element 275 is not connected to the antenna path 281, since the antenna path 281 is an open circuit, the antenna load reflects most signals. To describe a normal range of the detected transmission power, an upper limit of magnitude of the reflection coefficient may be determined. A first circle 310 of the Smith chart 300 represents the upper limit of the magnitude of the reflection coefficient. Output load impedance within the first circle 310 may represent that a state of the antenna path 281 is normal. If the region of the antenna path 281 is disconnected in a state in which the load element 275 is connected to the antenna path 281, since the load impedance for the antenna 240 approaches the characteristic impedance, the reflection coefficient may approach 0. To describe the normal range of the detected transmission power, a lower limit of the magnitude of the reflection coefficient may be determined. A second circle 320 of the Smith chart 300 represents the lower limit of the magnitude of the reflection coefficient. Output load impedance outside the second circle 320 may represent that the state of the antenna path 281 is abnormal. For example, output load impedance corresponding to a first point 330a may represent that the state of the antenna path 281 is not normal. For example, output load impedance corresponding to a second point 330b may represent that the state of the antenna path 281 is normal. For example, output load impedance corresponding to a third point 330c may represent that the state of the antenna path 281 is not normal.

The electronic device 101 may obtain transmission power based on a feedback signal from a coupler (e.g., the coupler 235). For example, the electronic device 101 may obtain the transmission power by measuring the feedback signal and then recalculating the measured result according to a ratio of the coupler 235. The electronic device 101 may identify a connection state to the antenna 240 by determining whether the obtained transmission power (hereinafter, referred to as measurement transmission power) is within the normal range. For example, a standard for the normal range of the measurement transmission power may be stored in memory (e.g., the memory 130) of the electronic device 101. For example, when actual transmission power is about 36 dBm and impedance of the load element 275 is about 50 ohms (e.g., impedance of a normal antenna load), a determination standard according to the measurement transmission power may be referred to in a table below.

**[Table 1]**

| Measurement Transmission Power (x) | Determination |
|---|---|
| 35dBm≤x<36dBm | Abnormal |
| 34dBm≤x<35dBm | Normal |
| 33dBm≤x<34dBm | Normal |
| 32dBm≤x<33dBm | Normal |
| 31 dBm≤x<32dBm | Normal |
| 30dBm≤x<31dBm | Normal |
| 29dBm≤x<30dBm | Normal |
| 28dBm≤x<29dBm | Abnormal |
| x<28dBm | Abnormal |

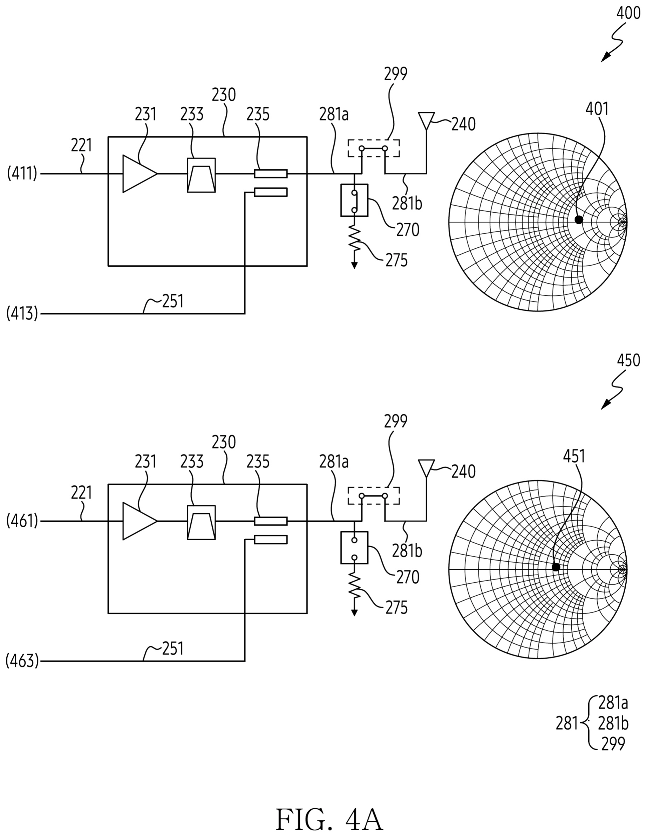

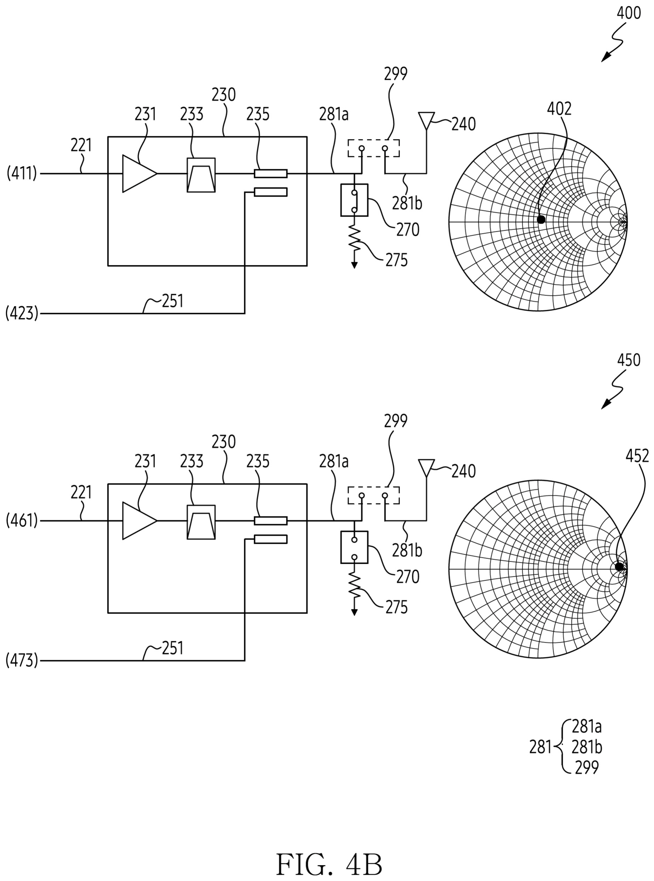

FIGS. 4A and 4B illustrate examples of operations of a load element and a switching circuit (e.g., the switching circuit 270). To describe components and operations of an electronic device 101 related to the switching circuit 270, descriptions of FIG. 2 may be referred to.

Referring to FIG. 4A, an operation of the switching circuit 270 according to a normal antenna load is described in FIG. 4A. In a first state 400, the switching circuit 270 may electrically connect the load element 275 to an antenna path 281. For example, the electronic device 101 may control the switching circuit 270 so that the load element 275 is electrically connected to the antenna path 281. The electronic device 101 may control the switching circuit 270 so that the load element 275 is electrically connected to the antenna path 281, in order to identify a state of an antenna load. A malfunction detection function may be activated in the first state 400. As the load element 275 is electrically connected to the antenna path 281, load impedance (e.g., output load impedance) for a front end module 230 may vary. In the first state 400, the output load impedance may have a first value 401. Referring to the Smith chart 300, the output load impedance of the first value 401 may represent that the antenna load is normal. For example, a processor 210 of the electronic device 101 may control an RF transceiver 220 to transmit a first signal 411. The first signal 411 may be provided to the front end module 230. The first signal 411 may be amplified by PA 231. For example, the electronic device 101 may control the PA 231 so that the first signal 411 is outputted at the maximum transmission power. A coupler 235 of the front end module 230 may output the amplified first signal 411. The coupler 235 of the front end module 230 may transmit at least a portion (e.g., a feedback signal 413) of the amplified first signal 411 to the RF transceiver 220 through a feedback path 251. For example, the feedback signal 413 obtained through coupling with a signal transmitted to an antenna 240 may be transmitted to the RF transceiver 220 through the feedback path 251. The electronic device 101 may obtain the feedback signal 413 for the first signal 411 through the RF transceiver 220. Since the load element 275 is in a state of being connected to the antenna path 281, it is difficult to identify transmission power measured by the feedback signal 413 as the maximum transmission power. For example, output power of the PA 231 may be about 36 dBm. The electronic device 101 may obtain that the transmission power to the antenna 240 is about 33 dBm based on the feedback signal 413. Since the antenna load is about 50 ohms and impedance of the load element 275 is about 50 ohms, the transmission power may be lowered by about 2 to 3 dB. Through the transmission power lowered due to the load element 275, it may be identified that a connection state for the antenna 240 is normal. The electronic device 101 may identify that the antenna load is normal, based on obtaining the transmission power lower than the maximum transmission power.

In a second state 450, the switching circuit 270 may not connect the load element 275 to the antenna path 281. The electronic device 101 may control the switching circuit 270 so that the load element 275 is not electrically connected to the antenna path 281. As the switching circuit 270 is opened, the load impedance (e.g., the output load impedance) for the front end module 230 is the same as impedance (e.g., first impedance) of the antenna load. In the second state 450, the output load impedance may have a second value 451. Referring to the Smith chart 300, the output load impedance of the second value 451 may represent that the antenna load is normal. For example, the processor 210 of the electronic device 101 may control the RF transceiver 220 to transmit a second signal 461. The second signal 461 may be provided to the front end module 230. The second signal 461 may be amplified by the PA 231. The coupler 235 of the front end module 230 may output the amplified second signal 461. The coupler 235 of the front end module 230 may transmit at least a portion (e.g., a feedback signal 463) of the amplified second signal 461 to the RF transceiver 220 through the feedback path 251. For example, the feedback signal 463 obtained through coupling with a signal transmitted to the antenna 240 may be transmitted to the RF transceiver 220 through the feedback path 251. The electronic device 101 may obtain the feedback signal 463 for the second signal 461 through the RF transceiver 220. For example, the output power of the PA 231 may be about 36 dBm. The electronic device 101 may obtain that the transmission power to the antenna 240 is about 36 dBm based on the feedback signal 463.

Referring to FIG. 4B, an operation of the switching circuit 270 according to an abnormal antenna load is described in FIG. 4B. For example, a disconnection may occur in a connection region 299 within the antenna path 281. For example, a connection structure (e.g., a C-clip, or a feed structure) connecting PCB on which the front end module 230 is disposed, with the antenna 240 may be damaged. The antenna path 281 may include a feed line in the PCB or a wiring of the antenna 240. For example, the feed line on which the front end module 230 is disposed, or the wiring of the antenna 240 may be cut off.

According to an embodiment, in the first state 400, the switching circuit 270 may electrically connect the load element 275 to the antenna path 281. The electronic device 101 may control the switching circuit 270 so that the load element 275 is electrically connected to the antenna path 281. As the load element 275 is electrically connected to the antenna path 281, load impedance (e.g., output load impedance) for the front end module 230 may vary. In the first state 400, the output load impedance may have a third value 402. Referring to the Smith chart 300, the output load impedance of the third value 402 may represent that the antenna load is abnormal. For example, the processor 210 of the electronic device 101 may control the RF transceiver 220 to transmit the first signal 411. The first signal 411 may be provided to the front end module 230. The coupler 235 of the front end module 230 may transmit at least a portion (e.g., a feedback signal 423) of the amplified first signal 411 to the RF transceiver 220 through the feedback path 251. For example, the feedback signal 413 obtained through coupling with a signal transmitted to the antenna 240 may be transmitted to the RF transceiver 220 through the feedback path 251. The electronic device 101 may obtain the feedback signal 423 for the first signal 411 through the RF transceiver 220. For example, the output power of the PA 231 may be about 36 dBm. The electronic device 101 may obtain that the transmission power to the antenna 240 is about 36 dBm based on the feedback signal 413. For example, due to the disconnection of the connection region 299, the antenna path 281 may operate as an open circuit. Although the load element 275 is connected, since the transmission power at a level equal to the output power of the PA 231 is identified, the electronic device 101 may identify that the connection state to the antenna 240 is abnormal.

According to an embodiment, in the second state 450, the switching circuit 270 may not electrically connect the load element 275 to the antenna path 281. The electronic device 101 may control the switching circuit 270 so that the load element 275 is not electrically connected to the antenna path 281. As the switching circuit 270 is opened, the load impedance (e.g., the output load impedance) of the front end module 230 may be the same as the impedance (e.g., the first impedance) of the antenna load. In the second state 450, the output load impedance may have a fourth value 452. Referring to the Smith chart 300, the output load impedance of the fourth value 452 may represent that the antenna load is abnormal. For example, the processor 210 of the electronic device 101 may control the RF transceiver 220 to transmit the second signal 461. The second signal 461 may be provided to the front end module 230. The coupler 235 of the front end module 230 may transmit at least a portion (e.g., a feedback signal 473) of the amplified second signal 461 to the RF transceiver 220 through the feedback path 251. For example, the feedback signal 473 obtained through coupling with a signal transmitted to the antenna 240 may be transmitted to the RF transceiver 220 through the feedback path 251. The electronic device 101 may obtain the feedback signal 473 for the second signal 461 through the RF transceiver 220. For example, the output power of the PA 231 may be about 36 dBm. The electronic device 101 may obtain that the transmission power to the antenna 240 is about 26 dBm based on the feedback signal 463. Due to the disconnection of the connection region 299, the antenna path 281 may operate as an open circuit. Since the antenna path 281 operates as an open circuit and the switching circuit 270 also operates as an open circuit, the output load impedance may be very high. Due to the high output load impedance, the transmission power may be lowered.

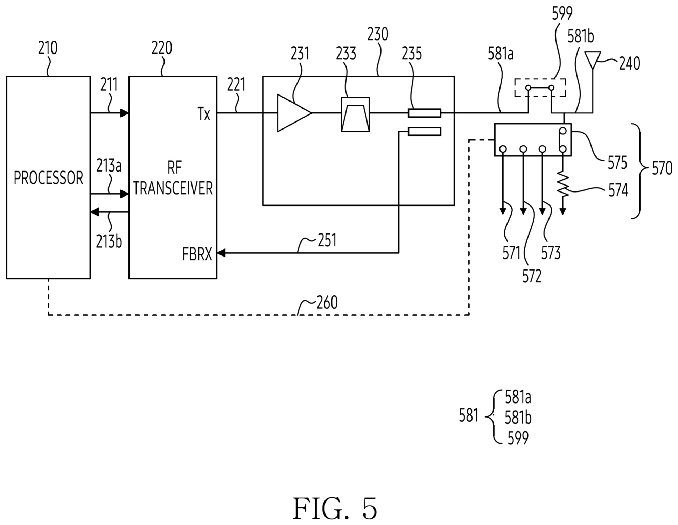

According to an embodiment, a connection line (e.g., the antenna path 281) between the PCB and the antenna 240 is normal, but a load condition of the antenna 240 itself is changed, and thus the antenna load may change rapidly. For example, in a case that severe distortion occurs in the antenna 240 due to damage to a case of the electronic device 101 used as a radiator of the antenna, or a portion in which the antenna 240 is positioned is excessively held by a hand of a user, a problem in communication may occur. In order to identify the state of the antenna load, a principle of the switching circuit 270 and the load element 275 described with reference to FIGS. 2 to 4B may be used in a tuning circuit for impedance matching of the antenna 240. Hereinafter, an example of identifying the state of the antenna load using the tuning circuit will be described with reference to FIGS. 5 to 6B.

FIG. 5 illustrates an example of an electronic device (e.g., the electronic device 101) including a tuning circuit. To describe components and operations of the electronic device 101, descriptions of FIG. 2 may be referred to. For example, the tuning circuit may be used for impedance matching of an antenna 240, and a ground of the antenna 240. In addition to the tuning circuit, the tuning circuit may be referred to as an antenna switch, an impedance tuner, an antenna tuner, a matching circuit, an impedance matching circuit, or a term having an equivalent technical meaning.

Referring to FIG. 5, the electronic device 101 may include a processor 210, an RF transceiver 220, a front end module 230, and the antenna 240. The electronic device 101 may use a tuning circuit 570 connected to the antenna 240 to check a connection state with the antenna 240. The electronic device 101 may include the tuning circuit 570. The tuning circuit 570 may be electrically connected to the antenna 240. In an embodiment, the tuning circuit 570 may be connected to a region of an antenna path 581. For example, the antenna path 581 may include a first path 581a adjacent to the front end module 230, a second path 581b adjacent to the antenna 240, and a connection region 599. On the other hand, components (e.g., the first path 581a, the second path 581b, and the connection region 599) of the antenna path 581 are expressed to represent a signal path that is disconnected when the connection region 599 of the antenna path 581 is damaged, and it does not mean that implementation of the antenna path 581 should be implemented with individual components.

According to an embodiment, the tuning circuit 570 may include a switching circuit 575 and a plurality of passive elements. For example, the switching circuit 575 may be a single pole n-throw (SPnT) switch. For example, the switching circuit 575 may electrically connect one of the plurality of passive elements to a second path 581b of the antenna path 581. Each passive element of the plurality of passive elements may be connected to the ground. For example, the plurality of passive elements may include a first load element 571 having first impedance, a second load element 572 having second impedance, a third load element 573 having third impedance, and a fourth load element 574 having fourth impedance. In the present disclosure, for description of the fourth load element 574, the load element 275 of FIGS. 2 to 4B described above may be referred to. In an embodiment, the tuning circuit 570 may be controlled such that impedance of an antenna load approaches characteristic impedance based on a selected or calculated code of the processor 210. Although a resistor is illustrated in FIG. 5, the resistor is only an example, and other passive elements may be used. For example, the first load element 571, the second load element 572, the third load element 573, and the fourth load element 574 may include at least one of the resistor, an inductor, and/or a capacitor. In addition, for another example, at least one of the first load element 571, the second load element 572, and/or the third load element 573 may be omitted.

In an embodiment, the electronic device 101 may identify a state of the antenna load by transmitting a signal and obtaining a feedback signal for the signal. The processor 210 of the electronic device 101 may activate a malfunction detection function. The processor 210 may transmit a control signal 260 to the tuning circuit 570 to identify the state of the antenna load. For example, the processor 210 may control the tuning circuit 570 so that the fourth load element 574 having specific impedance is electrically connected to the second path 581b of the antenna path 581, in order to identify the state of the antenna load. The antenna load may vary due to a problem of the antenna 240 itself. For example, load impedance of the antenna 240 may be ∞. Even if the impedance of the antenna load increases rapidly, an amount of change in an output load of PA 231 may decrease due to the fourth load element 574 connected to the second path 581b. As the fourth load element 574 is connected to the second path 581b so that the PA 231 may operate in a stable region, a risk of damage of the PA 231 may be lowered. A situation in which communication is not possible or malfunctioning due to the damage of the PA 231 may not occur. In a state in which the fourth load element 574 is connected to the antenna path 581, the electronic device 101 may obtain transmission power based on the feedback signal. The electronic device 101 may identify whether a state of the antenna 240 is normal or abnormal based on the transmission power. The electronic device 101 may identify a connection state of the antenna 240 by determining whether the transmission power is within a normal range. If the obtained transmission power is within the normal range, the electronic device 101 may communicate through the antenna 240 connected to the PA 231. If the obtained transmission power is outside the normal range, the electronic device 101 may cease communication or perform communication through another antenna different from the antenna 240.

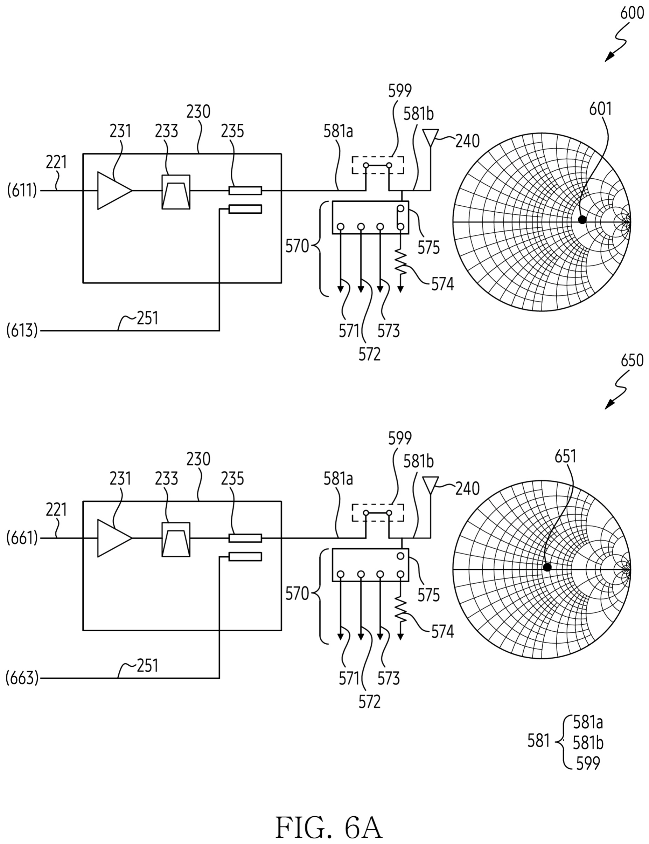

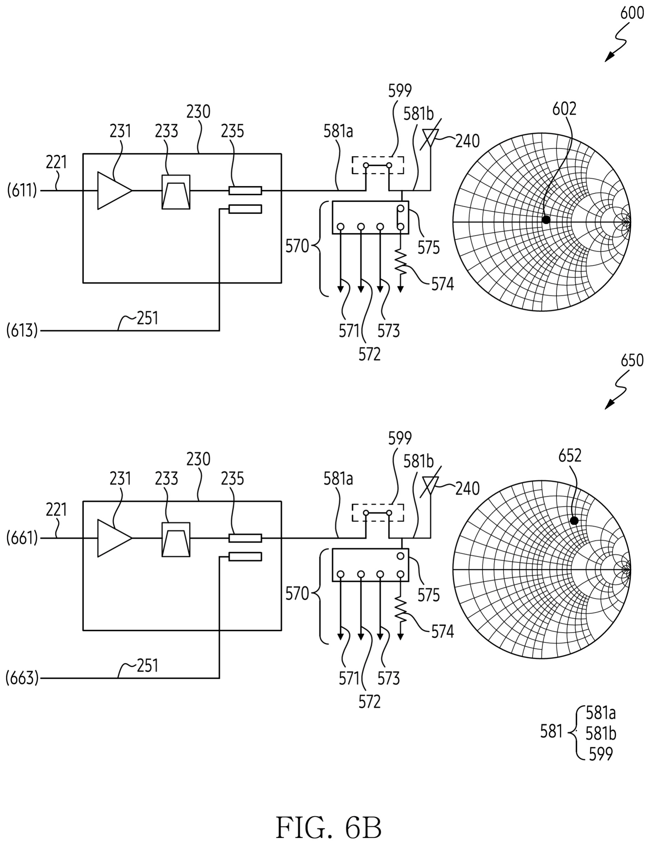

FIGS. 6A and 6B illustrate examples of operations of a load and a tuning circuit (e.g., the tuning circuit 570). To describe components and operations of an electronic device 101 related to the tuning circuit 570, descriptions of FIG. 5 may be referred to.

Referring to FIG. 6A, an operation of the tuning circuit 570 according to a normal antenna load is described in FIG. 6A. The tuning circuit 570 may be connected to an antenna path 581. For example, the tuning circuit 570 may be connected to a second path 581b. In a first state 600, a switching circuit 575 of the tuning circuit 570 may electrically connect a fourth load element 574 to the second path 581b. For example, the electronic device 101 may control the tuning circuit 570 so that the fourth load element 574 is electrically connected to the second path 581b. The electronic device 101 may control the switching circuit 575 so that the fourth load element 574 is electrically connected to the antenna path 581, in order to identify a state of the antenna load. A malfunction detection function may be activated in the first state 600. As the fourth load element 574 is connected to an antenna 240, load impedance (e.g., output load impedance) for a front end module 230 may vary. In the first state 600, the output load impedance may have a first value 601. Referring to a Smith chart 300, the output load impedance of the first value 601 may represent that the antenna load is normal. For example, a processor 210 of the electronic device 101 may control an RF transceiver 220 to transmit a first signal 611. The first signal 611 may be provided to the front end module 230. The first signal 611 may be amplified by PA 231. For example, the electronic device 101 may control the PA 231 so that the first signal 611 is outputted at the maximum transmission power (e.g., about 36 dBm). A coupler 235 of the front end module 230 may output the amplified first signal 611. The coupler 235 of the front end module 230 may transmit at least a portion (e.g., a feedback signal 613) of the amplified first signal 611 to the RF transceiver 220 through a feedback path 251. For example, the feedback signal 613 obtained through coupling with a signal transmitted to the antenna 240 may be transmitted to the RF transceiver 220 through the feedback path 251. The electronic device 101 may obtain the feedback signal 613 for the first signal 611 through the RF transceiver 220. In an embodiment, among a plurality of loads of the tuning circuit 570, the fourth load element 574 may have determined impedance. For example, load impedance of the antenna 240 may be about 50 ohms, and impedance of the fourth load element 574 may be about 50 ohms. Since the fourth load element 574 is connected to the antenna 240 in the first state 600, transmission power may be lowered by about 2 to 3 dB than the maximum transmission power. The electronic device 101 may obtain that the transmission power to the antenna 240 is about 33 dBm based on the feedback signal 613. Based on the transmission power lowered due to the fourth load element 574, it may be identified that a connection state for the antenna 240 is normal. The electronic device 101 may identify that the antenna load is normal, based on obtaining the transmission power lower than the maximum transmission power.

In a second state 650, the switching circuit 575 of the tuning circuit 570 may not connect the fourth load element 574 to the second path 581b. The electronic device 101 may control the switching circuit 575 so that the fourth load element 574 is not electrically connected to the antenna path 581. For example, the electronic device 101 may control the switching circuit 575 to connect another load element (e.g., a first load element 571, a second load element 572, or a third load element 573) to the second path 581b. For another example, the electronic device 101 may control the switching circuit 575 not to be electrically connected to any load. The switching circuit 575 may be opened. As the switching circuit 575 is opened, the load impedance (e.g., the output load impedance) for the front end module 230 is the same as impedance (e.g., first impedance) of the antenna load. In the second state 650, the output load impedance may have a second value 651. Referring to the Smith chart 300, the output load impedance of the second value 651 may represent that the antenna load is normal. For example, the processor 210 of the electronic device 101 may control the RF transceiver 220 to transmit a second signal 661. The second signal 661 may be provided to the front end module 230. The second signal 661 may be amplified by the PA 231. The coupler 235 of the front end module 230 may output the amplified second signal 661. The coupler 235 of the front end module 230 may transmit at least a portion (e.g., a feedback signal 663) of the amplified second signal 661 to the RF transceiver 220 through the feedback path 251. For example, the feedback signal 663 obtained through coupling with a signal transmitted to the antenna 240 may be transmitted to the RF transceiver 220 through the feedback path 251. The electronic device 101 may obtain the feedback signal 663 for the second signal 661 through the RF transceiver 220. For example, the output power of the PA 231 may be about 36 dBm. The electronic device 101 may obtain that the transmission power to the antenna 240 is about 36 dBm based on the feedback signal 663. It may be identified that transmission using the antenna 240 may be normally performed through the transmission power at a level equal to the output power of the PA 231.

Referring to FIG. 6B, an operation of the tuning circuit 570 according to an abnormal antenna load is described in FIG. 6B. For example, the antenna load may vary due to distortion of a radiator of the antenna 240 or an external environment for the antenna 240. In order to identify the changed antenna load, the malfunction detection function may be activated. In the first state 600, the tuning circuit 570 may electrically connect the fourth load element 574 to the antenna path 581. For example, the electronic device 101 may control the tuning circuit 570 so that the fourth load element 574 is electrically connected to the antenna path 581. As the fourth load element 574 is electrically connected to the antenna path 581, the load impedance (e.g., the output load impedance) of the front end module 230 may vary. In the first state 600, the output load impedance may have a third value 602. When comparing the first value 601 of FIG. 6A with the third value 602, the output load impedance of the third value 602 may represent that the antenna load is abnormal. For example, the processor 210 of the electronic device 101 may control the RF transceiver 220 to transmit the first signal 611. The first signal 611 may be provided to the front end module 230. The coupler 235 of the front end module 230 may transmit at least a portion (e.g., a feedback signal 623) of the amplified first signal 611 to the RF transceiver 220 through the feedback path 251. For example, the feedback signal 623 obtained through coupling with a signal transmitted to the antenna 240 may be transmitted to the RF transceiver 220 through the feedback path 251. The electronic device 101 may obtain the feedback signal 623 for the first signal 611 through the RF transceiver 220. For example, the output power of the PA 231 may be about 36 dBm. The electronic device 101 may obtain that the transmission power to the antenna 240 is about 36 dBm based on the feedback signal 623. Although the fourth load element 574 is electrically connected, since the transmission power at a level equal to the output power of the PA 231 is identified, the electronic device 101 may identify that a state of the antenna 240 is abnormal.

In the second state 650, the switching circuit 575 of the tuning circuit 570 may not connect the fourth load element 574 to the second path 581b. The electronic device 101 may control the switching circuit 575 so that the fourth load element 574 is electrically connected to the antenna path 581. For example, the electronic device 101 may control the switching circuit 575 to connect another load element (e.g., the first load element 571, the second load element 572, or the third load element 573) to the second path 581b. For another example, the electronic device 101 may control the switching circuit 575 not to be electrically connected to any load. The switching circuit 575 may be opened. In the second state 650, the output load impedance may have a fourth value 652. When comparing the second value 651 of FIG. 6A with the fourth value 652, the output load impedance of the fourth value 652 may represent that the antenna load is abnormal. For example, the processor 210 of the electronic device 101 may control the RF transceiver 220 to transmit the second signal 661. The second signal 661 may be provided to the front end module 230. The coupler 235 of the front end module 230 may transmit at least a portion (e.g., a feedback signal 673) of the amplified second signal 661 to the RF transceiver 220 through the feedback path 251. For example, the feedback signal 673 obtained through coupling with a signal transmitted to the antenna 240 may be transmitted to the RF transceiver 220 through the feedback path 251. The electronic device 101 may obtain the feedback signal 673 for the second signal 661 through the RF transceiver 220. For example, the output power of the PA 231 may be about 36 dBm. The electronic device 101 may obtain that the transmission power to the antenna 240 is about 28 dBm based on the feedback signal 673. For example, the load impedance of the antenna 240 may vary due to a state change of the antenna 240. As the tuning circuit 570 is not connected to any load and the load impedance of the antenna 240 increases, the output load impedance may increase. Due to the high output load impedance, the transmission power may be lowered.

Operations for identifying whether the antenna load is normal have been described with reference to FIGS. 2 to 6B. The electronic device 101 may control the switching circuit 270 (or the tuning circuit 570) to transmit a signal of a designated frequency band. The electronic device 101 may first identify a state of an antenna (e.g., the antenna 240) related to the designated frequency band. According to an embodiment, in a state in which the load element 275 is electrically connected to the antenna path 281 using the switch circuit 270, the electronic device 101 may transmit a first signal of the designated frequency band, and then determine whether to transmit a second signal of the designated frequency band based on a feedback signal for the first signal. According to an embodiment, the first signal and the second signal may be random access preambles used in an access procedure. The electronic device 101 may transmit a random access preamble used to access a network in a state in which the load element 275 is connected to the antenna path 281 (or the antenna path 581). The electronic device 101 may determine whether to transmit the random access preamble through the antenna 240, whether to transmit the random access preamble through another antenna, or whether not to transmit any signal, based on the feedback signal for the random access preamble signal. In the example, the random access preamble is illustrated as the first signal and the second signal, but embodiments of the present disclosure are not limited thereto. According to another embodiment, the first signal transmitted for the purpose of identifying the connection state of the antenna 240 may be a separate signal (e.g., a predefined signal) (hereinafter, a test signal) configured for the purpose of testing in addition to the random access preamble. The electronic device 101 may transmit a test signal in a state in which the load element 275 is connected to the antenna path 281 (or the antenna path 581), and based on a feedback signal for the test signal, and then determine whether to transmit a signal (e.g., an uplink signal, an acknowledgement signal, or the random access preamble) through the antenna 240, or whether to transmit the signal through another antenna ,or whether not to transmit any signal.

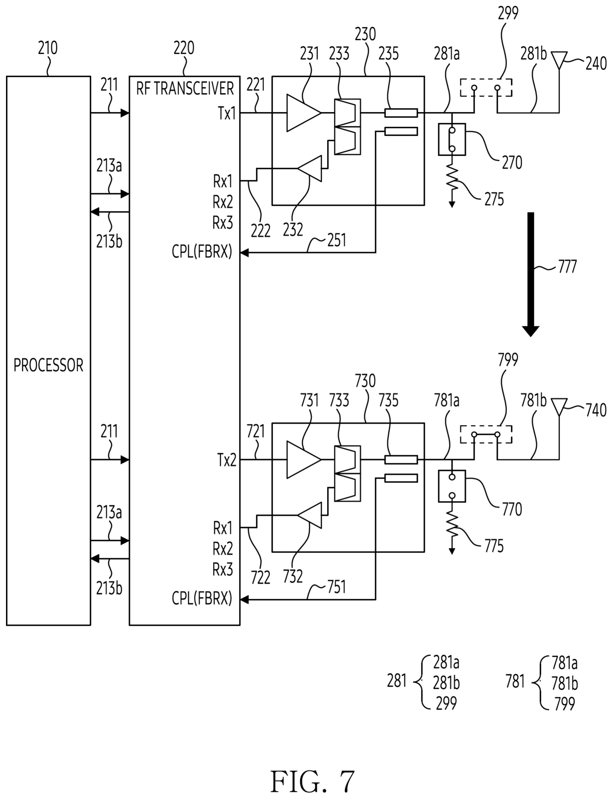

According to an embodiment, based on identifying that the connection state of the antenna 240 is abnormal, the electronic device 101 may cease signal transmission using the antenna 240. In an embodiment, the electronic device 101 may additionally perform another operation in addition to ceasing the signal transmission using the antenna 240. For example, the electronic device 101 may use another front end module and another antenna to transmit the second signal of the designated frequency band. For another example, the electronic device 101 may use another antenna connected to the front end module 230 to transmit the second signal of the designated frequency band. Hereinafter, examples of changing an antenna will be described with reference to FIGS. 7 to 10.

FIG. 7 illustrates an example of a change of a front end module. To describe components and operations of an electronic device 101 related to a switching circuit 270, descriptions of FIG. 2 may be referred to.

Referring to FIG. 7, the electronic device 101 may include a processor 210, an RF transceiver 220, a front end module 230, and an antenna 240. The processor 210 may control overall operations of the electronic device 101. For example, the processor 210 may control the RF transceiver 220 through a control interface 211. For example, the processor 210 may control the switching circuit 270. The processor 210 may transmit a signal 213a (e.g., analog data or digital data). For example, the signal 213a may be a signal transmitted for checking an antenna load. For another example, the signal 213a may be a communication signal to be transmitted to another electronic device (e.g., a base station, or another terminal). The processor 210 may control the RF transceiver 220 so that the signal is transmitted through the antenna 240. The processor 210 may receive a signal 213b (e.g., analog data or digital data). For example, the signal 213b may be a signal received from the other electronic device (e.g., the base station, a satellite, or the other terminal) through the antenna 240. For another example, the signal 213b may include a signal (e.g., a feedback signal) for measuring transmission power. The processor 210 may control the RF transceiver 220 so that the signal 213b is received.

The RF transceiver 220 may convert a baseband signal generated by the processor 210 into an RF signal. The RF transceiver 220 may include one or more transmission ports. The RF transceiver 220 may provide the RF signal to the front end module 230 through a path 221. The RF transceiver 220 may convert the RF signal received from the antenna 240 into the baseband signal to be processed by the processor 210. The RF transceiver 220 may include one or more reception ports. The RF transceiver 220 may obtain an RF signal from the front end module 230 through a path 222. The front end module 230 may support processing of a signal of a designated frequency band (e.g., an N255 band (a non-terrestrial network (NTN), 1.6 GHz, FDD), or an N256 band (NTN, 2 GHz, FDD)). For example, the front end module 230 may include PA 231 for a transmission path, LNA 232 for a reception path, a duplexer 233, and a coupler 235.

In an embodiment, the electronic device 101 may include a front end module 730 supporting the designated frequency band. For example, the front end module 730 may include a power amplifier 731, LNA 732, a duplexer 733, and a coupler 735. The duplexer 733 may be used to distinguish between a transmission path and a reception path of an antenna 740. For example, the duplexer 733 may include a filter for an uplink band of the designated frequency band and a filter for a downlink band of the designated frequency band. The coupler 735 may be electrically connected to a feedback port FBRX of the RF transceiver 220 through a feedback path 751. The RF transceiver 220 may provide an RF signal of the designated frequency band to the front end module 730 through a path 721. The RF transceiver 220 may obtain the RF signal of the designated frequency band from the front end module 730 through a path 722. The front end module 730 may be electrically connected to the antenna 740 through an antenna path 781. A load of the antenna 740 and/or a load of the antenna path 781 (hereinafter, referred to as an antenna load) may vary due to deformation of the antenna 740 or damage to at least a portion of the antenna path 781. The antenna path 781 may include a first path 781a, a connection region 799, and a second path 781b. On the other hand, components (e.g., the first path 781a, the second path 781b, or the connection region 799) of the antenna path 781 are expressed to represent a signal path that is disconnected when the connection region 799 of the antenna path 781 is damaged, and it does not mean that implementation of the antenna path 781 should be implemented with individual components.

The electronic device 101 according to embodiments of the present disclosure may use a switching circuit 770 and a load element 775 to check a connection state with the antenna 740. The electronic device 101 may include the switching circuit 770 and the load element 775. The load element 775 may be electrically connected to the antenna path 781 for the antenna 740 through the switching circuit 770. The load element 775 may include at least one passive element having impedance. For example, the load element 775 may include at least one of a resistor, a capacitor, or an inductor. According to an embodiment, the switching circuit 770 and the load element 775 may be disposed on PCB. In an embodiment, in order to check the connection state of the antenna 740, such as a state of the antenna load, the switching circuit 770 and the load element 775 may be disposed in a region adjacent to a feed line for the antenna 740 in the PCB. For example, the switching circuit 770 may electrically connect the load element 775 to the first path 781a of the antenna path 781. The processor 210 may control the switching circuit 770 based on a control signal.

The processor 210 of the electronic device 101 may control the RF transceiver 220 to transmit a first signal of the designated frequency band through the front end module 230. The processor 210 may control the switching circuit 270 so that the load element 275 is connected to the antenna path 281, in order to check a connection state of the antenna 240. In a state in which the load element 275 is connected to the antenna path 281, the processor 210 may transmit the first signal, and then obtain a feedback signal for the first signal from the coupler 235 through a feedback path 251. The processor 210 may identify that the connection state of the antenna 240 is abnormal based on the feedback signal. The processor 210 may determine ceasing of signal transmission using the antenna 240. In an embodiment, the processor 210 may determine a path change 777. The processor 210 may identify an antenna (e.g., the antenna 740) that is different from the antenna 250 and is for transmitting a signal of the designated frequency band. The processor 210 may identify a front end module (e.g., the front end module 730) that is different from the front end module 230 and supports the designated frequency band. The processor 210 may control the RF transceiver 220 to transmit the signal through the front end module 730 that supports the designated frequency band, and the antenna 740. The processor 210 may control the RF transceiver 220 to transmit a second signal of the designated frequency band through the front end module 730.

In an embodiment, like the antenna 240, the processor 210 may control the switching circuit 770 so that the load element 775 is connected to the antenna path 781, in order to check a connection state of the antenna 740. In a state in which the load element 775 is electrically connected to the antenna path 781, the processor 210 may transmit the second signal, and then obtain a feedback signal for the second signal from the coupler 735 through the feedback path 751. The processor 210 may identify that the connection state of the antenna 740 is normal based on the feedback signal. After checking the connection state of the antenna 740, the electronic device 101 may control the switching circuit 270 so that the load element 275 is not connected to the antenna path 281. The processor 210 may control the RF transceiver 220 to transmit a signal through the front end module 730 and the antenna 740.

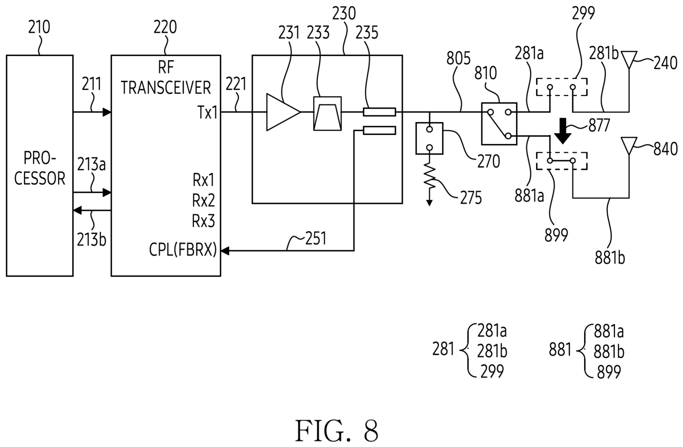

FIG. 8 illustrates an example of antenna switching. To describe components and operations of an electronic device 101 related to a switching circuit 270, descriptions of FIG. 2 may be referred to.

Referring to FIG. 8, the electronic device 101 may include a processor 210, an RF transceiver 220, a front end module 230, and an antenna 240. The processor 210 may control overall operations of the electronic device 101. The RF transceiver 220 may provide an RF signal to the front end module 230 through a path 221. The RF transceiver 220 may obtain an RF signal from the front end module 230 through a path 222. The front end module 230 may support signal processing of a designated frequency band (e.g., an N255 band (NTN, 1.6 GHz, FDD), and an N256 band (NTN, 2 GHz, FDD)). For example, the front end module 230 may include PA 231 for a transmission path, LNA 232 for a reception path, a duplexer 233, and a coupler 235.

In an embodiment, the front end module 230 may be electrically connected to at least one of a plurality of antennas. For example, the front end module 230 may be electrically connected to the antenna 240. For example, the front end module 230 may be electrically connected to an antenna 740. In order to transmit a signal of the designated frequency band, the electronic device 101 may use an antenna that does operate normally instead of an antenna that does not operate normally. The electronic device 101 may include a path 805 and a path switch 810 for antenna switching. The path 805 may be included in an antenna path 281 for the antenna 240. For example, a first path 281a may include the path 805. The path 805 may be included in an antenna path 881 for an antenna 840. For example, a first path 881a may include the path 805. The front end module 230 may be electrically connected to the path switch 810 through the path 805. The path switch 810 may be electrically connected to the plurality of antennas. For example, the path switch 810 may be connected to the antenna 240 through the antenna path 281. The path switch 810 may be connected to the antenna 840 through the antenna path 881. The path switch 810 may be, for example, a single pole dual throw (SPDT) switch. For example, the path switch 810 may be configured to selectively connect one of the antenna path 281 and the antenna path 881 with the front end module 230. The processor 210 may control the path switch 810 so that the front end module 230 is electrically connected to the antenna path 281 and the antenna path 881. The antenna path 881 may include the first path 881a, a connection region 899, and a second path 881b. On the other hand, components (e.g., the first path 881a, the second path 881b, or the connection region 899) of an antenna path are expressed to represent a signal path that is disconnected when the connection region 899 of the antenna path 881 is damaged, and it does not mean that implementation of the antenna path 881 should be implemented with individual components.

The processor 210 of the electronic device 101 may control the RF transceiver 220 to transmit a first signal of the designated frequency band through the front end module 230. In order to identify a connection state of the antenna 240, the processor 210 may control the switching circuit 270 so that a load element 275 is electrically connected to the path 805, and may control the path switch 810 so that the front end module 230 is connected to the antenna path 281. In a state in which the load element 275 is electrically connected to the path 805, the processor 210 may transmit the first signal and obtain a feedback signal for the first signal from the coupler 235 through a feedback path 251. For example, the connection region 299 of the antenna path 281 may be damaged. The processor 210 may identify that the connection state of the antenna 240 is abnormal based on the feedback signal. The processor 210 may determine to cease signal transmission using the antenna 240. In an embodiment, the processor 210 may determine a path change 877. The processor 210 may identify an antenna (e.g., the antenna 840) that is different from the antenna 240, and is for transmitting a signal of the designated frequency band. The processor 210 may control the path switch 810 to transmit the signal through the antenna 840. The processor 210 may control the path switch 810 so that the front end module 230 is electrically connected to the antenna path 881. In this case, in order to identify a connection state of the antenna 840, the load element 275 may be connected to the path 805 through the switching circuit 270. While the load element 275 is connected to the path 805, the processor 210 may transmit a second signal of the designated frequency band and obtain a feedback signal for the second signal from the coupler 235 through the feedback path 251. The processor 210 may identify that the connection state of the antenna 840 is normal based on the feedback signal. After identifying the connection state of the antenna 840, the electronic device 101 may control the switching circuit 270 so that the load element 275 is not connected to the path 805. The processor 210 may control the RF transceiver 220 to transmit the signal of the designated frequency band through the front end module 230 and the antenna 840.

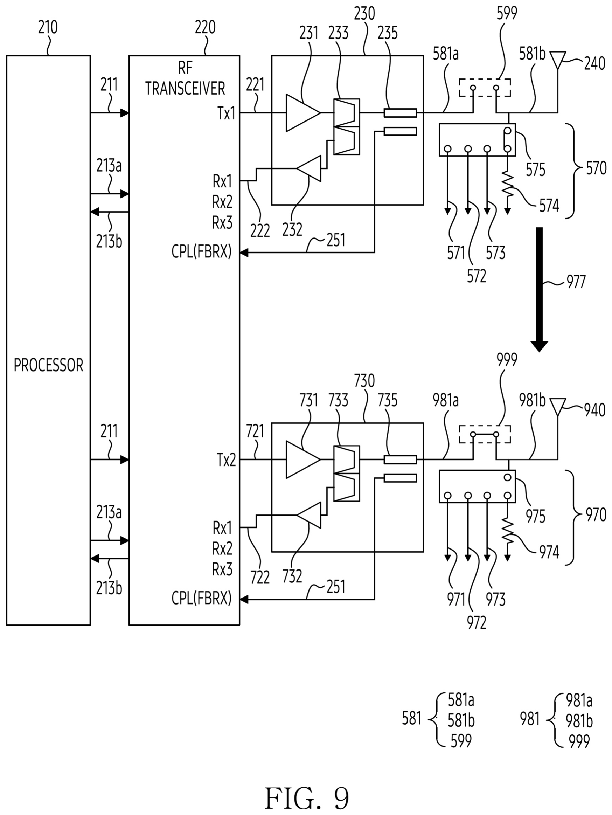

FIG. 9 illustrates an example of a change of a front end module using a tuning circuit (e.g., the tuning circuit 570). To describe components and operations of an electronic device 101 related to the tuning circuit 570, descriptions of FIG. 5 may be referred to. To describe additional front end module supporting a frequency band supported in a front end module 230 and components of the front end module, descriptions of FIG. 7 may be referred to.

Referring to FIG. 9, the electronic device 101 may include a processor 210, an RF transceiver 220, the front end module 230, and an antenna 240. The processor 210 may control overall operations of the electronic device 101. For example, the processor 210 may control the RF transceiver 220 through a control interface 211. For example, the processor 210 may control the tuning circuit 570. The processor 210 may transmit a signal 213a (e.g., analog data or digital data). For example, the signal 213a may be a signal transmitted for checking an antenna load. For another example, the signal 213a may be a communication signal to be transmitted to another electronic device (e.g., a base station, or another terminal). The processor 210 may control the RF transceiver 220 to transmit the signal through the antenna 240. The processor 210 may receive a signal 213b (e.g., analog data or digital data). For example, the signal 213b may be a signal received from the other electronic device (e.g., the base station, a satellite, or the other terminal) through the antenna 240. For another example, the signal 213b may include a signal (e.g., a feedback signal) for measuring transmission power. The processor 210 may control the RF transceiver 220 to receive the signal 213b.

The RF transceiver 220 may convert a baseband signal generated by the processor 210 into an RF signal. The RF transceiver 220 may include one or more transmission ports. The RF transceiver 220 may provide the RF signal to the front end module 230 through a path 221. The RF transceiver 220 may convert the RF signal received from the antenna 240 into the baseband signal to be processed by the processor 210. The RF transceiver 220 may include one or more reception ports. The RF transceiver 220 may obtain an RF signal from the front end module 230 through a path 222. The front end module 230 may support processing of a signal in a designated frequency band (e.g., an N255 band (NTN, 1.6 GHz, FDD), or an N256 band (NTN, 2 GHz, FDD)). For example, the front end module 230 may include PA 231 for a transmission path, LNA 232 for a reception path, a duplexer 233, and a coupler 235.

In an embodiment, the electronic device 101 may include a front end module 730 supporting the designated frequency band. For example, the front end module 730 may include a power amplifier 731, LNA 732, a duplexer 733, and a coupler 735. The duplexer 733 may be used to distinguish between a transmission path and a reception path of an antenna 940. For example, the duplexer 733 may include a filter for an uplink band of the designated frequency band and a filter for a downlink band of the designated frequency band. The coupler 735 may be electrically connected to a feedback port FBRX of the RF transceiver 220 through a feedback path 751. The RF transceiver 220 may provide an RF signal of the designated frequency band to the front end module 730 through a path 721. The RF transceiver 220 may obtain the RF signal of the designated frequency band from the front end module 730 through a path 722. The front end module 730 may be electrically connected to the antenna 940 through an antenna path 981. A load of the antenna 940 and/or a load of the antenna path 981 (hereinafter, referred to as the antenna load) may vary due to deformation of the antenna 940 or damage to at least a portion of the antenna path 981. The antenna path 981 may include a first path 981a, a connection region 999, and a second path 981b. On the other hand, components (e.g., the first path 981a, the second path 981b, or the connection region 999) of an antenna path are expressed to represent a signal path that is disconnected when the connection region 999 of the antenna path 981 is damaged, and it does not mean that implementation of the antenna path 981 should be implemented with individual components.

The electronic device 101 according to embodiments of the present disclosure may use a tuning circuit 970 to check a connection state with the antenna 940. The tuning circuit 970 may be used for impedance matching of the antenna 940 and a ground of the antenna 940. In addition to the tuning circuit, the tuning circuit 970 may be referred to as an antenna switch, an impedance tuner, an antenna tuner, a matching circuit, an impedance matching circuit, or a term having an equivalent technical meaning. The tuning circuit 970 may include a switching circuit 975 and a plurality of passive elements. The switching circuit 975 may electrically connect one of the plurality of passive elements to the second path 981b of the antenna path 981. Each passive element of the plurality of passive elements may be connected to the ground. For example, the plurality of passive elements may include a first load element 971 having first impedance, a second load element 972 having second impedance, a third load element 973 having third impedance, and/or a fourth load element 974 having fourth impedance. The tuning circuit 970 may be controlled such that impedance of an antenna load approaches characteristic impedance based on a selected or calculated code of the processor 210. Although a resistor is illustrated in FIG. 9, the resistor is only an example, and other passive elements may be used. For example, each of the first load element 971, the second load element 972, the third load element 973, and the fourth load element 974 may include at least one of the resistor, an inductor, and/or a capacitor. In addition, for another example, at least one of the first load element 971, the second load element 972, the third load element 973, and/or the fourth load element 974 may be omitted.

The processor 210 of the electronic device 101 may control the RF transceiver 220 to transmit a first signal of the designated frequency band through the front end module 230. In order to check a connection state of the antenna 240, the processor 210 may control the tuning circuit 570 so that a fourth load element 574 is electrically connected to a second path 581b through a switching circuit 575. The fourth load element 574 may be electrically connected to the antenna 240 through the switching circuit 575 and the second path 581b of the tuning circuit 570. In a state in which the fourth load element 574 is connected to the antenna 240, the processor 210 may transmit the first signal and obtain a feedback signal for the first signal from the coupler 235 through a feedback path 251. The processor 210 may identify that the connection state of the antenna 240 is abnormal based on the feedback signal. The processor 210 may determine to cease signal transmission using the antenna 240. In an embodiment, the processor 210 may determine a path change 977. The processor 210 may identify an antenna (e.g., the antenna 940) that operates normally instead of the antenna 240. According to an embodiment, at least one of the first load element 971, the second load element 972, the third load element 973, and/or the fourth load element 974 may be used to detect a connection state of the antenna 940. For example, the fourth load element 974 may be used to detect the connection state of the antenna 940. The processor 210 may control the tuning circuit 970 so that the fourth load element 974 is connected to the second path 981b through the switching circuit 975. In a state in which the fourth load element 974 is connected to the antenna path 981, the processor 210 may transmit the second signal and obtain a feedback signal for the second signal from the coupler 735 through the feedback path 751. The processor 210 may identify that the connection state of the antenna 940 is normal based on the feedback signal. After checking the connection state of the antenna 940, the electronic device 101 may control the tuning circuit 970 so that the fourth load element 974 is not connected to the antenna 940. The processor 210 may control the RF transceiver 220 to transmit a signal through the front end module 730 and the antenna 940.

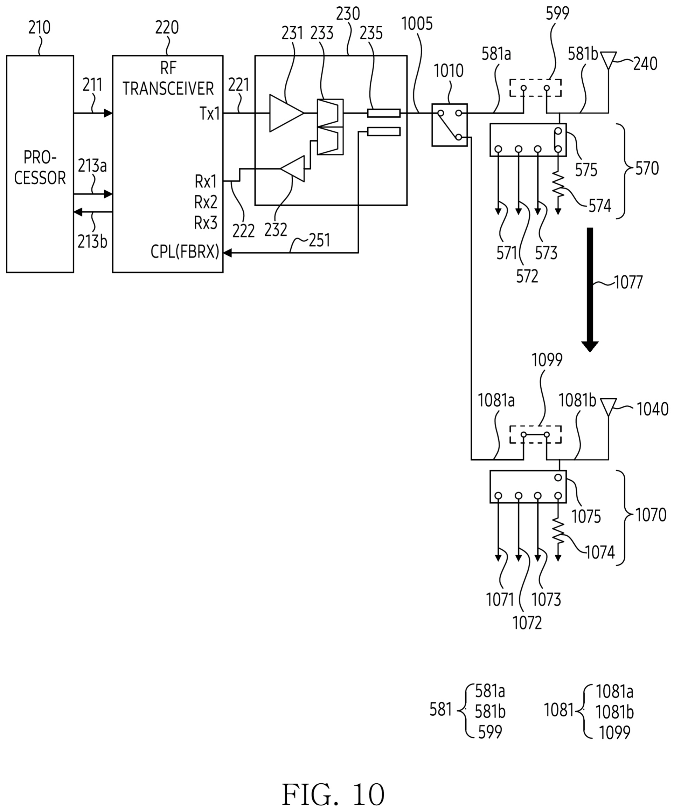

FIG. 10 illustrates an example of antenna switching using a tuning circuit (e.g., the tuning circuit 570). To describe components and operations of an electronic device 101 related to the tuning circuit 570, descriptions of FIG. 5 may be referred to. To describe additional front end module supporting a frequency band supported in a front end module 230 and components of the front end module, descriptions of FIG. 9 may be referred to.

Referring to FIG. 10, the electronic device 101 may include a processor 210, an RF transceiver 220, a front end module 230, and an antenna 240. The processor 210 may control overall operations of the electronic device 101. The RF transceiver 220 may provide an RF signal to the front end module 230 through a path 221. The RF transceiver 220 may obtain an RF signal from the front end module 230 through a path 222. The front end module 230 may support processing of a signal of a designated frequency band (e.g., am N255 band (NTN, 1.6 GHz, FDD), or an N256 band (NTN, 2 GHz, FDD)). For example, the front end module 230 may include PA 231 for a transmission path, LNA 232 for a reception path, a duplexer 233, and a coupler 235.

The front end module 230 may be electrically connected to at least one of a plurality of antennas. For example, the front end module 230 may be electrically connected to the antenna 240. For example, the front end module 230 may be electrically connected to an antenna 1040. In order to transmit a signal of the designated frequency band, the electronic device 101 may use an antenna that does operate normally instead of an antenna that does not operate normally. In an embodiment, the electronic device 101 may include a path 1005 and a path switch 1010 for antenna switching. The front end module 230 may be electrically connected to the path switch 1010 through the path 1005. The path switch 1010 may be electrically connected to the plurality of antennas. For example, the path switch 1010 may be connected to the antenna 240 through an antenna path 581. The path switch 810 may be connected to the antenna 1040 through an antenna path 1081. The path switch 1010 may be, for example, an SPDT switch. The path switch 1010 may be configured to selectively electrically connect one of the antenna path 581 and the antenna path 1081 to the front end module 230. The processor 210 may control the path switch 1010 so that the front end module 230 is connected to the antenna path 581 and the antenna path 1081. The antenna path 1081 may include a first path 1081a, a connection region 1099, and a second path 1081b. On the other hand, components (e.g., the first path 1081a, the second path 1081b, or the connection region 1099) of the antenna path 1081 are expressed to represent a signal path that is disconnected when the connection region 1099 of the antenna path 1081 is damaged, and it does not mean that implementation of the antenna path 1081 should be implemented with individual components.

The electronic device 101 according to embodiments of the present disclosure may use a tuning circuit 1070 to check a connection state with the antenna 1040. The tuning circuit 1070 may be used for impedance matching of the antenna 1040 and a ground of the antenna 1040. The tuning circuit 1070 may include a switching circuit 1075 and a plurality of passive elements. The switching circuit 1075 may electrically connect one of the plurality of passive elements to the second path 1081b of the antenna path 1081. Each passive element of the plurality of passive elements may be connected to the ground. For example, the plurality of passive elements may include a first load element 1071 having first impedance, a second load element 1072 having second impedance, a third load element 1073 having third impedance, and/or a fourth load element 1074 having fourth impedance. The tuning circuit 1070 may be controlled such that impedance of an antenna load approaches characteristic impedance based on a selected or calculated code of the processor 210. Although a resistor is illustrated in FIG. 10, the resistor is only an example, and other passive elements may be used. For example, the first load element 1071, the second load element 1072, the third load element 1073, or the fourth load element 1074 may include at least one of the resistor, an inductor, and/or a capacitor. In addition, for another example, at least one of the first load element 1071, the second load element 1072, the third load element 1073, and/or the fourth load element 1074 may be omitted.

The processor 210 of the electronic device 101 may control the RF transceiver 220 to transmit a first signal of the designated frequency band through the front end module 230. The processor 210 may control the tuning circuit 570 so that the fourth load element 574 is connected to the second path 581b, and may control the path switch 1010 so that the front end module 230 is electrically connected to the antenna path 581. In a state in which the fourth load element 574 is electrically connected to the second path 581b, the processor 210 may transmit the first signal, and obtain a feedback signal for the first signal from the coupler 235 through a feedback path 251. For example, the connection region 599 of the antenna path 581 may be damaged. The processor 210 may identify that a connection state of the antenna 240 is abnormal based on the feedback signal. The processor 210 may determine to cease signal transmission using the antenna 240. In an embodiment, the processor 210 may determine a path change 1077. The processor 210 may identify an antenna (e.g., the antenna 1040) that is different from the antenna 240 and is for transmitting a signal of the designated frequency band. The processor 210 may control the path switch 1010 to transmit the signal through the antenna 1040. The processor 210 may control the path switch 1010 so that the front end module 230 is electrically connected to the antenna path 1081. In order to check the connection state of the antenna 1040, a designated load (e.g., the fourth load element 1074) may be connected to the second path 1081b through the switching circuit 1075. The processor 210 may control the tuning circuit 1070 so that the designated load is connected to the second path 1081b, in order to check the connection state of the antenna 1040. In a state in which the designated load is connected to the second path 1081b, the processor 210 may transmit a second signal of the designated frequency band, and obtain a feedback signal for the second signal from the coupler 235 through the feedback path 251. The processor 210 may confirm that the connection state of the antenna 1040 is normal based on the feedback signal. In an embodiment, after checking the connection state of the antenna 1040, the electronic device 101 may control the tuning circuit 1070 so that the designated load is not connected to the antenna 1040. For example, the electronic device 101 may control the tuning circuit 1070 so that another load (e.g., the second load element 1072) for impedance matching of the antenna 1040 is connected to the antenna 1040. The processor 210 may control the RF transceiver 220 to transmit the signal of the designated frequency band through the front end module 230 and the antenna 1040.

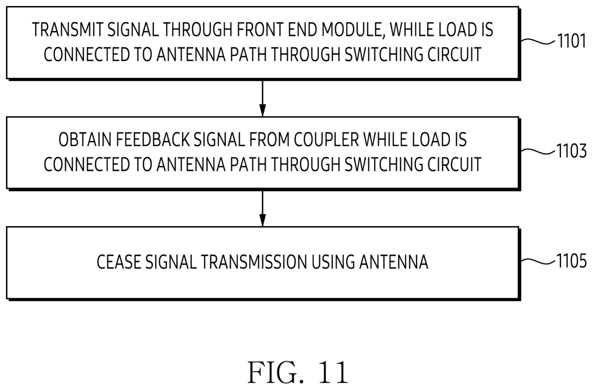

FIG. 11 illustrates an operation flow of an electronic device (e.g., the electronic device 101) for ceasing signal transmission based on a feedback signal. In FIG. 11, a situation in which a connection state of an antenna of the electronic device 101 is abnormal is described. For example, as a structure for connecting the antenna and PCB is damaged, an antenna load may increase. As the antenna load varies, impedance mismatch may occur.

Referring to FIG. 11, in operation 1101, the electronic device 101 may transmit a signal though a front end module (e.g., the front end module 230) and an antenna (e.g., the antenna 240) while a load is connected to an antenna path (e.g., the antenna path 281, or the antenna path 581) through a switching circuit (e.g., the switching circuit 270, or the tuning circuit 570). For example, the electronic device 101 may operate in a malfunction detection mode. The electronic device 101 may control the switching circuit according to the malfunction detection mode. In order to detect a malfunction of the antenna, the electronic device 101 may electrically connect a load having impedance of designated magnitude to the antenna path through the switching circuit. The front end module may support a designated frequency band. The electronic device 101 may transmit a signal of the designated frequency band through the front end module and the antenna while the load is electrically connected to the antenna path. For example, the designated frequency band may include a satellite frequency band (e.g., an N255 band (1.6 GHz FDD) or an N256 band (2GHz or FDD)). For example, the designated frequency band may include a frequency band for cellular communication. Even if it is not a frequency band for satellite communication, the switching circuit and the load may be used for a power amplifier (e.g., the PA 231) of high-power.

In operation 1103, the electronic device 101 may obtain a feedback signal from a coupler (e.g., the coupler 235) while the load is connected to the antenna path (e.g., the antenna path 281 or the antenna path 581) through the switching circuit (e.g., the switching circuit 270, or the tuning circuit 570). While the load is connected to the antenna path through the switching circuit and the signal is being transmitted through the front end module and the antenna, the electronic device 101 may obtain the feedback signal from the coupler. The front end module (e.g., the front end module 230) of the electronic device 101 may include the coupler. The coupler may be configured to transmit a signal amplified by the power amplifier (e.g., the PA 231) to the antenna (e.g., the antenna 240), and transmit the feedback signal to an RF transceiver (e.g., the RF transceiver 220). The feedback signal may be transmitted to the RF transceiver through a feedback path (e.g., the feedback path 251) by being coupled by the coupler. A processor of the electronic device 101 may obtain the feedback signal from the RF transceiver.

The electronic device 101 may obtain information corresponding to transmission power while the load is connected to the antenna path through the switching circuit and the signal is being transmitted through the front end module and the antenna. The electronic device 101 may obtain transmission power of the signal outputted to the antenna based on the feedback signal. The electronic device 101 may identify whether the transmission power is within a normal range. The electronic device 101 may identify that the transmission power is not within the normal range. The transmission power obtained by the feedback signal should be detected lower than reference transmission power since the load is connected to the antenna path if the antenna load is normal. The reference transmission power represents output power expected in the power amplifier. For example, as the structure for connecting the antenna and the PCB is damaged, the antenna load for the antenna may increase. Even if a load (e.g., the load element 275 or the fourth load element 574) for detecting the malfunction is connected to the antenna path, power is not sufficiently transmitted to the antenna load. Accordingly, the transmission power obtained by the feedback signal may be detected within a range equivalent to the reference transmission power. The electronic device 101 may identify that the transmission power is not within the normal range, based on the stored normal range.

In operation 1105, the electronic device 101 may cease signal transmission using the antenna (e.g., the antenna 240). The electronic device 101 may identify that the connection state of the antenna is abnormal based on identifying that the transmission power for the antenna is not within the normal range. The electronic device 101 may cease the signal transmission using the antenna. According to an embodiment, the electronic device 101 may terminate a communication service in the designated frequency band. For example, in a case of attempting to transmit a message through the satellite communication, the electronic device 101 may detect the connection state of the antenna connected to a communication module (e.g., the front end module 230) supporting the satellite frequency band. When the connection state of the antenna is not normal, the electronic device 101 may terminate the service using the satellite communication. In an embodiment, the electronic device 101 may display a message notifying a user that the service is terminated without changing to another antenna.

In FIG. 11, ceasing the signal transmission using the antenna has been described, but embodiments of the present disclosure are not limited thereto. According to an embodiment, the electronic device 101 may use another antenna to transmit the signal of the designated frequency band. The electronic device 101 may cease the signal transmission using the antenna and transmit the signal of the designated frequency band through an antenna different from the antenna.

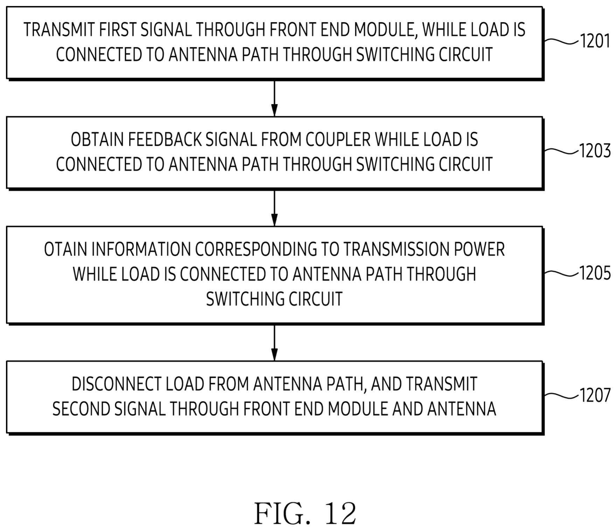

FIG. 12 illustrates an operation flow of an electronic device (e.g., the electronic device 101) for transmitting a signal based on a feedback signal. In FIG. 12, a situation in which a connection state of an antenna of the electronic device 101 is normal is described. In order to test the connection state of the antenna, the electronic device 101 may control a switching circuit to connect a load to a wiring of the antenna.

In operation 1201, the electronic device 101 may transmit a first signal through a front end module (e.g., the front end module 230) and an antenna (e.g., the antenna 240), while a load is connected to an antenna path (e.g., the antenna path 281 or the antenna path 581) through a switching circuit (e.g., the switching circuit 270 or the tuning circuit 570). For example, the electronic device 101 may operate in a malfunction detection mode. The electronic device 101 may control the switching circuit according to the malfunction detection mode. In order to detect a malfunction of the antenna, the electronic device 101 may connect a load having impedance of designated magnitude to the antenna path through the switching circuit. The front end module may support a designated frequency band. The electronic device 101 may transmit a first signal of the designated frequency band through the front end module and the antenna while the load is connected to the antenna path.

In operation 1203, the electronic device 101 may obtain a feedback signal for the first signal of the designated frequency band from a coupler (e.g., the coupler 235), while the load is connected to the antenna path (e.g., the antenna path 281 or the antenna path 581) through the switching circuit (e.g., the switching circuit 270 or the tuning circuit 570). While the load is connected to the antenna path through the switching circuit and the signal is being transmitted through the front end module and the antenna, the electronic device 101 may obtain the feedback signal from the coupler. The front end module (e.g., the front end module 230) of the electronic device 101 may include the coupler. The coupler may be configured to transmit the first signal amplified by a power amplifier (e.g., the PA 231) to the antenna (e.g., the antenna 240), and transmit the feedback signal for the first signal to an RF transceiver (e.g., the RF transceiver 220).

In operation 1205, while the load is connected to the antenna path through the switching circuit and the signal is being transmitted through the front end module and the antenna, the electronic device 101 may obtain information corresponding to transmission power. The electronic device 101 may obtain transmission power of the signal outputted to the antenna based on the feedback signal in the operation 1203. The electronic device 101 may identify whether the transmission power is within a normal range. For example, the electronic device 101 may identify that the transmission power is within the normal range. Since a load (e.g., the load element 275 and the fourth load element 574) for detecting the malfunction is connected to the antenna path, the transmission power obtained by the feedback signal may be detected to be lower than reference transmission power. The reference transmission power represents output power expected in the power amplifier. The electronic device 101 may identify that the connection state to the antenna is normal based on obtaining the transmission power lower than the reference transmission power.

In operation 1207, the electronic device 101 may disconnect the load (e.g., the load element 275 or the fourth load element 574) from the antenna path (e.g., the antenna path 281, or the antenna path 581). In a case that the information indicates that the transmission power of the signal is within the normal range, the electronic device 101 may disconnect the load from the antenna path. For example, the electronic device 101 may operate in a transmission mode. The electronic device 101 may change an operation mode from the malfunction detection mode to the transmission mode in order to actually transmit the signal through the antenna. The electronic device 101 may control the switching circuit so that the load is not electrically connected to the antenna path through the switching circuit. In order to transmit the signal through the antenna, the electronic device 101 may control the switching circuit so that the load for detecting the malfunction is no longer connected to the antenna path. As the load is not connected to the antenna path, output impedance of the front end module may correspond to impedance of an antenna load.

In operation 1207, the electronic device 101 may transmit a second signal through the front end module (e.g., the antenna 230) and the antenna (e.g., the antenna 240). In a case that the information indicates that the transmission power of the signal is within the normal range, the electronic device 101 may transmit the second signal through the front end module and the antenna. After identifying that normal communication is possible through the antenna through the first signal, the electronic device 101 may communicate with an external electronic device (e.g., the electronic device 102, the electronic device 104, the electronic device 108, or the satellite) through the second signal. According to an embodiment, the first signal may include a random access preamble used in a cell access procedure. The second signal may include a random access preamble identical to the first signal. The electronic device 101 may first transmit the first signal to test the connection state of an antenna for transmitting the random access preamble. After identifying that the connection state of the antenna is normal, the electronic device 101 may transmit the second signal for actual communication. According to an embodiment, the first signal may include a signal separately defined to test the connection state of the antenna. The electronic device 101 may first transmit the first signal to test the connection state of the antenna. After identifying that the connection state of the antenna is normal, the electronic device 101 may transmit the second signal for actual communication.

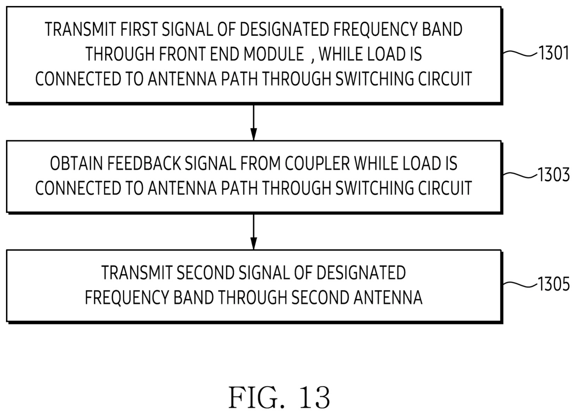

FIG. 13 illustrates an operation flow of an electronic device (e.g., the electronic device 101) for changing an antenna based on a feedback signal. In FIG. 11, a situation in which a connection state of an antenna of the electronic device 101 is abnormal is described. For example, as a structure for connecting the antenna and PCB is damaged, an antenna load may increase.

In operation 1301, the electronic device 101 may transmit a first signal of a designated frequency band through a first antenna (e.g., the antenna 240), while a load is connected to an antenna path (e.g., the antenna path 281 or the antenna path 581) through a switching circuit (e.g., the switching circuit 270 or the tuning circuit 570). For example, the electronic device 101 may operate in a malfunction detection mode. The electronic device 101 may control the switching circuit according to the malfunction detection mode. In order to detect a malfunction of the first antenna, the electronic device 101 may connect a load having impedance of designated magnitude to the antenna path through the switching circuit.

In operation 1303, the electronic device 101 may obtain a feedback signal from a coupler (e.g., coupler 235) while the load is connected to the antenna path (e.g., the antenna path 281 or the antenna path 581) through the switching circuit (e.g., the switching circuit 270 or the tuning circuit 570). While the load is connected to the antenna path through the switching circuit and the signal is being transmitted through the front end module and the antenna, the electronic device 101 may obtain the feedback signal from the coupler. The coupler may be configured to transmit a signal amplified by a power amplifier (e.g., the PA 231) to the first antenna (e.g., the antenna 240), and transmit the feedback signal to an RF transceiver (e.g., the RF transceiver 220). The feedback signal may be transmitted to the RF transceiver through a feedback path (e.g., the feedback path 251) by being coupled by the coupler. A processor of the electronic device 101 may obtain the feedback signal from the RF transceiver. The electronic device 101 may obtain information corresponding to transmission power while the load is connected to the antenna path through the switching circuit and the signal is being transmitted through the front end module and the antenna. The electronic device 101 may obtain transmission power of the signal outputted to the first antenna based on the feedback signal. The electronic device 101 may identify whether the transmission power for the first antenna is within a normal range. For example, the electronic device 101 may identify that the transmission power for the first antenna is not within the normal range.

In operation 1305, the electronic device 101 may transmit a second signal of the designated frequency band through a second antenna (e.g., the antenna 740, the antenna 840, the antenna 940, and the antenna 1040). The electronic device 101 may identify that the connection state of the first antenna is abnormal based on identifying that the transmission power for the first antenna is not within the normal range. The electronic device 101 may identify the second antenna different from the first antenna. The electronic device 101 may identify the second antenna to transmit a signal of the designated frequency band. According to an embodiment, the electronic device 101 may identify a second communication module (e.g., the front end module 730) that supports substantially the same frequency band as a first communication module (e.g., the front end module 230) connected to the first antenna. The electronic device 101 may identify a second antenna (e.g., the antenna 740, or the antenna 940) connected to the second communication module. The processor 210 of the electronic device 101 may control the RF transceiver so that the signal is transmitted through the second communication module instead of the first communication module. According to another embodiment, the electronic device 101 may identify a second antenna (e.g., the antenna 840 or the antenna 1040) connected to the first communication module (e.g., the front end module 230) connected to the first antenna. The electronic device 101 may control a path switch (e.g., the path switch 810, or the path switch 1010) so that the communication module is connected to the second antenna.

The electronic device 101 may transmit a signal through an antenna path connected to the second antenna before transmitting the second signal of the designated frequency band through the second antenna. The electronic device 101 may transmit a signal (e.g., a test signal) through the antenna path in order to identify whether the antenna path connected to the second antenna is normal. The electronic device 101 may identify whether a state of the antenna path is normal or abnormal based on a feedback signal for the signal. For example, if the state of the antenna path is normal, the electronic device 101 may transmit the signal (e.g., the test signal) through the antenna path. For another example, if the state of the antenna path is abnormal, unlike illustrated in FIG. 13, the electronic device 101 may identify an antenna path different from the second antenna.

In embodiments, an electronic device (e.g., the electronic device 101) is provided. The electronic device may comprise a processor (e.g., the processor 120 of FIG. 1, or the processor 220 of FIG. 2), a radio frequency (RF) transceiver (e.g., the RF transceiver 220 of FIG. 2), a front end module (e.g., the front end module 230 of FIG. 2) including a power amplifier (PA) (e.g., the PA 231 of FIG. 2) and a coupler (e.g., the coupler 235 of FIG. 2), an antenna (e.g., the antenna 240), a load element (e.g., the load element 275, or the fourth load element 574), and a switching circuit (e.g., the switching circuit 270, or the tuning circuit 570) configured to selectively connect the load element to an antenna path (e.g., the antenna path 281) for the antenna. The processor may be configured to control the RF transceiver to transmit a signal through the front end module and the antenna while the load element is connected to the antenna path through the switching circuit. The processor may be configured to obtain, through the RF transceiver, a feedback signal from the coupler while the load element is connected to the antenna path through the switching circuit and the signal is transmitted through the front end module and the antenna. The processor may be configured to obtain information corresponding to transmission power of the signal based on the feedback signal obtained while the load element is connected to the antenna path through the switching circuit. The processor may be configured to, in a case that the information indicates that the transmission power is within a reference power range, control the RF transceiver to disconnect the load element from the antenna path through the switching circuit and transmit the signal through the front end module and the antenna.

According to an embodiment, the processor may be configured to cease signal transmission using the antenna in a case that the information indicates that the transmission power is outside the reference power range.

According to an embodiment, the antenna path may be configured to provide a connection between the front end module and the antenna.

According to an embodiment, the electronic device may comprise another front end module (e.g., the front end module 730 of FIG. 7) for a designated frequency band in which the signal is transmitted, and another antenna (e.g., the antenna 740 of FIG. 7) connected to the other front end module. The processor may be configured to control the RF transceiver to transmit the signal of the designated frequency band through the other front end module and the other antenna based on the feedback signal.

According to an embodiment, the electronic device may further comprise a path switch (e.g., the path switching 810 of FIG. 8), and another antenna (e.g., the antenna 840 of FIG. 8). The path switch may be configured to electrically connect the front end module with one of the antenna path and an antenna path for the other antenna. The processor may be configured to control the antenna switch to transmit a signal through the front end module and the other antenna based on the feedback signal.

According to an embodiment, the electronic device may comprise a printed circuit board (PCB) on which the processor, the RF transceiver, and the front end module are disposed, and a conductive structure configured to electrically connect the PCB with the antenna.

According to an embodiment, the antenna path may be disposed on the PCB. It may include at least a portion of a feed line configured to electrically connect the front end module with the conductive structure.

According to an embodiment, the switching circuit may be configured to electrically connect one of a plurality of passive elements (e.g., the first load element 571, the second load element 572, the third load element 573, and the fourth load element 574) for impedance tuning of the antenna with the antenna. The plurality of passive elements may include the load element.

According to an embodiment, the electronic device may comprise a PCB on which the processor, the RF transceiver, and the front end module are disposed. The switching circuit and the load element may be disposed on the PCB.

According to an embodiment, the load element and the switching circuit may be disposed in the front end module.

According to an embodiment, the electronic device may comprise a modulator for supplying voltage to the PA.

According to an embodiment, the load element may comprise at least one of a resistor, a capacitor, or an inductor.

According to an embodiment, the designated frequency band in which the signal is transmitted may include a n255 band or a n266 band for non-terrestrial networks (NTN) communication.

According to an embodiment, the signal of the designated frequency band may include a random access preamble.

According to an embodiment, the processor may be configured to control the switching circuit to connect the load element to the antenna path in a malfunction detection mode, and control the switching circuit to disconnect the load element from the antenna path in a transmission mode different from the malfunction detection mode.

In embodiments, an electronic device (e.g., the electronic device 101) is provided. The electronic device may comprise a processor, a radio frequency (RF) transceiver (e.g., the processor 120 of FIG. 1, or the processor 220 of FIG. 2), a front end module (e.g., the front end module 230 of FIG. 2) including a power amplifier (PA) (e.g., the PA 231 of FIG. 2) and a coupler (e.g., the coupler 235 of FIG. 2), a first antenna (e.g., the antenna 240), a second antenna (e.g., the antenna 740, the antenna 840, or the antenna 940), a load element (e.g., the load element 275, or the fourth load element 574), and a switching circuit (e.g., the switching circuit 270, or the tuning circuit 570) configured to selectively connect the load element to an antenna path (e.g., the antenna path 281) for the first antenna. The processor may be configured to control the RF transceiver to transmit a first signal of a designated frequency band through the front end module and the first antenna while the load element is connected to the antenna path through the switching circuit. The processor may be configured to obtain, through the RF transceiver, a feedback signal from the coupler while the load element is connected to the antenna path through the switching circuit and the signal is transmitted through the front end module and the antenna. The processor may be configured to obtain information corresponding to transmission power of the signal based on the feedback signal obtained while the load element is connected to the antenna path through the switching circuit. The processor may be configured to, in a case that the information indicates that the transmission power is outside a reference power range, control the RF transceiver to transmit a second signal of the designated frequency band through the second antenna.

According to an embodiment, the processor may be configured to identify another front end module (e.g., the front end module 730 of FIG. 7) supporting the designated frequency band, in a case that the information indicates that the transmission power is outside the reference power range. The processor may be configured to control the RF transceiver to transmit the second signal of the designated frequency band through the other front end module and the second antenna connected to the other front end module.

According to an embodiment, the switching circuit may be configured to electrically connect one of a plurality of passive elements (e.g., the first load element 571, the second load element 572, the third load element 573, and the fourth load element 574) for impedance tuning of the antenna with the antenna. The plurality of passive elements may include the load element.

According to an embodiment, the processor may control the RF transceiver to transmit the second signal of the designated frequency band through the front end module and the second antenna, based on the feedback signal. The second antenna may be connected to the front end module.

According to an embodiment, the electronic device may comprise a path switch (e.g., the path switching 810 of FIG. 8) configured to electrically connect one of the antenna path for the first antenna and another antenna path for the second antenna with the front end module. The processor may control the path switch so that the front end module is connected to the other antenna path for the second antenna based on the feedback signal. The processor may control the RF transceiver to transmit the second signal of the designated frequency band through the front end module and the second antenna.

In embodiments, an electronic device (e.g., the electronic device 101) is provided. The electronic device may comprise a processor (e.g., the processor 120 of FIG. 1, or the processor 220 of FIG. 2), a radio frequency (RF) transceiver (e.g., the RF transceiver 220 of FIG. 2), a front end module (e.g., the front end module 230 of FIG. 2) including a power amplifier (PA) (e.g., the PA 231 of FIG. 2) and a coupler (e.g., the coupler 235 of FIG. 2), an antenna (e.g., the antenna 240), a load element (e.g., the load element 275, or the fourth load element 574), and a switching circuit (e.g., the switching circuit 270, or the tuning circuit 570) configured to selectively connect the load element to an antenna path (e.g., the antenna path 281) for the antenna. The processor may be configured to control the RF transceiver to transmit a signal through the front end module and the antenna while the load element is connected to the antenna path through the switching circuit. The processor may be configured to obtain, through the RF transceiver, a feedback signal of the designated frequency band from the coupler while the load element is connected to the antenna path through the switching circuit and the signal is transmitted through the front end module and the antenna. The processor may be configured to obtain information corresponding to transmission power of the signal based on the feedback signal obtained while the load element is connected to the antenna path through the switching circuit. The processor may be configured to, in a case that the information indicates that the transmission power is outside a reference power range, cease signal transmission using the antenna path.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a processor including one or more processing circuits;
a radio frequency (RF) transceiver;
a front end module (FEM) including a power amplifier (PA) and a coupler;
an antenna;
a load element; and
a switching circuit configured to selectively connect the load element to an antenna path for the antenna,
wherein the processor is configured to:
control the RF transceiver to transmit a signal through the FEM and the antenna while the load element is connected to the antenna path through the switching circuit;
obtain, through the RF transceiver, a feedback signal from the coupler while the load element is connected to the antenna path through the switching circuit and the signal is transmitted through the FEM and the antenna;
obtain information corresponding to transmission power of the signal based on the feedback signal obtained while the load element is connected to the antenna path through the switching circuit; and
in a case that the information indicates that the transmission power is within a reference power range, control the RF transceiver to disconnect the load element from the antenna path through the switching circuit and transmit the signal through the FEM and the antenna.

2. The electronic device of claim 1, wherein the processor is configured to cease signal transmission using the antenna in a case that the information indicates that the transmission power is outside the reference power range.

3. The electronic device of claim 1, wherein the antenna path is configured to provide a connection between the FEM and the antenna.

4. The electronic device of claim 1, further comprising:
another FEM for a designated frequency band in which the signal is transmitted; and
another antenna connected to the other FEM, and
wherein the processor is further configured to control the RF transceiver to transmit the signal of the designated frequency band through the other FEM and the other antenna based on the feedback signal.

5. The electronic device of claim 1, further comprising:
a path switch; and
another antenna,
wherein the path switch is configured to electrically connect the FEM with one of the antenna path and an antenna path for the other antenna, and
wherein the processor is further configured to control the antenna switch to transmit a signal through the FEM and the other antenna based on the feedback signal.

6. The electronic device of claim 1, further comprising:
a printed circuit board (PCB) on which the processor, the RF transceiver, and the FEM are disposed; and
a conductive structure configured to electrically connect the PCB with the antenna.

7. The electronic device of claim 6, wherein the antenna path includes at least a portion of a feed line disposed on the PCB and configured to electrically connect the FEM with the conductive structure.

8. The electronic device of claim 1, wherein the switching circuit is configured to electrically connect one of a plurality of passive elements for impedance tuning of the antenna with the antenna, and the plurality of passive elements include the load element.

9. The electronic device of claim 1, further comprising:
a PCB on which the processor, the RF transceiver, and the FEM are disposed, and
wherein the switching circuit and the load element are disposed on the PCB.

10. The electronic device of claim 1, wherein the load element and the switching circuit are disposed in the FEM.

11. The electronic device of claim 1, further comprising a modulator for supplying voltage to the PA.

12. The electronic device of claim 1, wherein the load element comprises at least one of a resistor, a capacitor, or an inductor.

13. The electronic device of claim 1, wherein the designated frequency band in which the signal is transmitted includes a n255 band or a n266 band for non-terrestrial networks (NTN) communication.

14. The electronic device of claim 1, wherein the signal of the designated frequency band includes a random access preamble.

15. The electronic device of claim 1, wherein the processor is configured to:
control the switching circuit to connect the load element to the antenna path in a malfunction detection mode; and
control the switching circuit to disconnect the load element from the antenna path in a transmission mode different from the malfunction detection mode.
